# EUROPEAN PATENT APPLICATION

(11) **EP 4 391 340 A1**
(43) Date of publication of application: **26.06.2024**
(21) Application number: 22953407.8
(22) Date of filing: 30.07.2022
(51) Int. Cl.: H02M 3/155, H02M 7/537, H02J 3/38

(54) **POWER CONVERSION DEVICE, CONTROL METHOD, AND POWER SUPPLY SYSTEM**

(71) Applicant: Huawei Digital Power Technologies Co., Ltd., Shenzhen, Guangdong 518043 (CN)
(72) Inventor: WANG, Zhaohui, Shenzhen, Guangdong 518043 (CN); SHI, Lei, Shenzhen, Guangdong 518043 (CN); GAO, Yongbing, Shenzhen, Guangdong 518043 (CN)
(74) Representative: Epping - Hermann - Fischer
(86) International application number: PCT/CN2022/109298
(87) International publication number: WO 2024/026590

(57) **Abstract**

This application provides a power conversion apparatus, a control method, and a power supply system. The power conversion apparatus includes a first group of input ends, a second group of input ends, a first direct current conversion circuit, a second direct current conversion circuit, a positive direct current bus, a negative direct current bus, a first bus capacitor, a second bus capacitor, a first output end, and a second output end. The first bus capacitor and the second bus capacitor are connected in series between the positive direct current bus and the negative direct current bus, and the positive direct current bus and the negative direct current bus are respectively connected to the first output end and the second output end of the power conversion apparatus. An input end of the first direct current conversion circuit is connected to a first group of first input ends, and an output end of the first direct current conversion circuit is separately connected to two ends of the first bus capacitor. An input end of the second direct current conversion circuit is connected to a second group of second input ends, and an output end of the second direct current conversion circuit is separately connected to two ends of the second bus capacitor. A first group of second input ends are connected to the negative direct current bus, and a second group of first input ends are connected to the positive direct current bus. According to this application, costs of the power conversion apparatus can be reduced.

## Description

### TECHNICAL FIELD

This application relates to the field of power supply technologies, and in particular, to a power conversion apparatus, a control method, and a power supply system.

### BACKGROUND

In both a new energy power generation system (such as a photovoltaic power generation system) and a battery energy storage system, a large amount of power electronic conversion equipment (such as inverters) is required to control power, to implement energy interaction and voltage matching between a direct current and an alternating current, and flexibly control a new energy power generation device (such as a photovoltaic panel) and an energy storage battery.

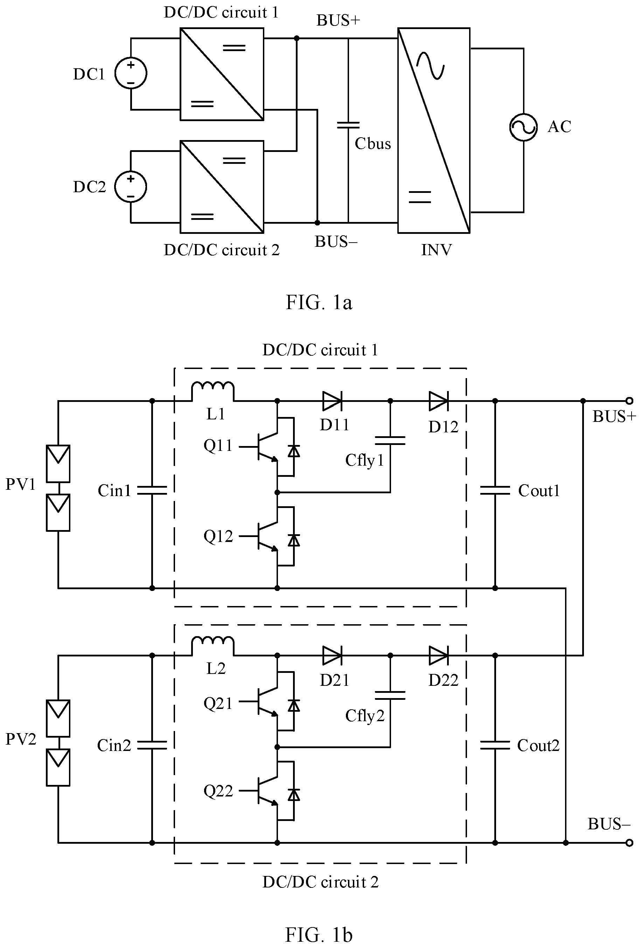

Currently, a power supply system (including the new energy power generation system and the battery energy storage system) uses an inverter shown in FIG. 1a to supply power to an alternating current power grid. As shown in FIG. 1a, the inverter includes a direct current DC/direct current DC circuit 1, a DC/DC circuit 2, and an inverter circuit INV An input end of the DC/DC circuit 1 is connected to a direct current power supply DC1, and two output ends of the DC/DC circuit 1 are respectively connected to a positive direct current bus BUS+ and a negative direct current bus BUS-. An input end of the DC/DC circuit 2 is connected to a direct current power supply DC2, and two output ends of the DC/DC circuit 2 are respectively connected to the positive direct current bus BUS+ and the negative direct current bus BUS-. The positive direct current bus BUS+ and the negative direct current bus BUS- are connected to an alternating current power grid AC through the inverter circuit INV

Because the output ends of the DC/DC circuit 1 and the DC/DC circuit 2 are both directly connected to the positive direct current bus BUS+ and the negative direct current bus BUS-, the DC/DC circuit 1 and the DC/DC circuit 2 with high circuit costs are usually used to meet a voltage requirement between the positive direct current bus BUS+ and the negative direct current bus BUS-.

For example, to meet an application requirement that a voltage between the positive direct current bus BUS+ and the negative direct current bus BUS- is 1500 V, in the photovoltaic power generation system, the DC/DC circuit 1 and the DC/DC circuit 2 use a flying capacitor three-level boost circuit shown in FIG. 1b. Most power semiconductors in the flying capacitor three-level boost circuit are 1000 V or 1200 V devices, for example, 1000 V/1200 V insulated gate bipolar transistors (insulated gate bipolar transistors, IGBTs) Q11 and Q12, or 1200 V silicon carbide-Schottky barrier diodes (silicon carbide-Schottky barrier diodes, SiC-SBDs). It is clear that there are a large quantity of power semiconductor devices in the DC/DC circuit 1 and the DC/DC circuit 2 shown in FIG. 1b. Based on this, circuit costs of the DC/DC circuit 1 and the DC/DC circuit 2 are high, and consequently, market competitiveness of the inverter is low. Therefore, how to reduce the circuit costs of the DC/DC circuit 1 and the DC/DC circuit 2 is particularly important.

### SUMMARY

This application provides a power conversion apparatus, a control method, and a power supply system, to reduce circuit costs of a direct current conversion circuit in the power conversion apparatus, thereby reducing costs of the power conversion apparatus.

According to a first aspect, this application provides a power conversion apparatus. The power conversion apparatus includes a first group of input ends, a second group of input ends, a first direct current conversion circuit, a second direct current conversion circuit, a positive direct current bus, a negative direct current bus, a first bus capacitor, a second bus capacitor, and a first output end and a second output end of the power conversion apparatus. The first group of input ends and the second group of input ends are respectively connected to a direct current power supply. The first output end and the second output end of the power conversion apparatus are connected to a load. The first group of input ends include a first group of first input ends and a first group of second input ends. The second group of input ends include a second group of first input ends and a second group of second input ends. The first bus capacitor and the second bus capacitor are connected in series between the positive direct current bus and the negative direct current bus, and the positive direct current bus and the negative direct current bus are respectively connected to the first output end and the second output end of the power conversion apparatus. An input end of the first direct current conversion circuit is connected to the first group of first input ends, and an output end of the first direct current conversion circuit is separately connected to two ends of the first bus capacitor. A first input end of the second direct current conversion circuit is connected to the second group of second input ends, and an output end of the second direct current conversion circuit is separately connected to two ends of the second bus capacitor. The first group of second input ends are connected to the negative direct current bus, and the second group of first input ends are connected to the positive direct current bus. Further, the power conversion apparatus connects the first bus capacitor and the second bus capacitor in series between the positive direct current bus and the negative direct current bus, connects the two output ends of the first direct current conversion circuit to the first bus capacitor, and connects the two output ends of the second direct current conversion circuit to the two ends of the second bus capacitor, to reduce voltage drop borne by each of the two direct current conversion circuits. This can reduce circuit costs of the two direct current conversion circuits, reduce costs of the power conversion apparatus, and further improve market competitiveness of the power conversion apparatus.

With reference to the first aspect, in a first possible implementation, the power conversion apparatus further includes a first input capacitor and a second input capacitor. The input end of the first direct current conversion circuit includes a first input end and a second input end. One end of the first input capacitor is connected to the first input end of the first direct current conversion circuit and the first group of first input ends. The other end of the first input capacitor is connected to the second input end of the first direct current conversion circuit or the first group of second input ends. The input end of the second direct current conversion circuit includes a first input end and a second input end. One end of the second input capacitor is connected to the first input end of the second direct current conversion circuit and the second group of second input ends. The other end of the second input capacitor is connected to the second input end of the second direct current conversion circuit or the second group of first input ends. It may be understood that the power conversion apparatus may further filter a direct current output by the direct current power supply by adding an input capacitor, so that the direct current input into the direct current conversion circuit is smoother, and impact of the power conversion apparatus on the direct current power supply is reduced. In addition, the input capacitor may be located between the two input ends of the direct current conversion circuit, or may be located between a group of input ends of the power conversion apparatus. Locations of the input capacitor are diversified, so that the power conversion apparatus has a more diversified structure and high flexibility.

With reference to the first possible implementation of the first aspect, in a second possible implementation, the output end of the first direct current conversion circuit includes a first output end and a second output end. The first direct current conversion circuit includes a first switching device, a second switching device, and a first power inductor. The second switching device and the first power inductor are connected in series between the first input end and the first output end of the first direct current conversion circuit, or the second switching device and the first power inductor are connected in series between the second input end and the second output end of the first direct current conversion circuit. One end of the first switching device is connected to the first input end or the second input end of the first direct current conversion circuit. The other end of the first switching device is connected to a connection point between the second switching device and the first power inductor. The second direct current conversion circuit includes a first output end and a second output end. The second direct current conversion circuit includes a third switching device, a fourth switching device, and a second power inductor. The fourth switching device and the second power inductor are connected in series between the first input end and the first output end of the second direct current conversion circuit, or the fourth switching device and the second power inductor are connected in series between the second input end and the second output end of the second direct current conversion circuit. One end of the third switching device is connected to the first input end or the second input end of the second direct current conversion circuit. The other end of the third switching device is connected to a connection point between the fourth switching device and the second power inductor. Because the first bus capacitor and the second bus capacitor are connected in series between the positive direct current bus and the negative direct current bus, generally, the first bus capacitor and the second bus capacitor each bear a half of a direct current bus voltage. In other words, voltage values borne by the first direct current conversion circuit and the second direct current conversion circuit both decrease by half. When power semiconductor devices of a same voltage level are used, a quantity of power semiconductor devices used in the direct current conversion circuit used in the implementations of this application is half less than a quantity of power semiconductor devices used in the direct current conversion circuit that bears an entire direct current bus voltage. Circuit costs of the direct current conversion circuit can be significantly reduced, and costs of the power conversion apparatus can be significantly reduced. In addition, the first direct current conversion circuit and the second direct current conversion circuit have various structures, so that the first direct current conversion circuit and the second direct current conversion circuit are combined in various manners. Therefore, the power conversion apparatus has various structures and has high flexibility.

With reference to the second possible implementation of the first aspect, in a third possible implementation, both the first switching device and the third switching device are controllable switching transistors, and both the second switching device and the fourth switching device are controllable switching transistors or uncontrollable diodes. Specifically, the controllable switching transistor in this application is a bidirectional semiconductor device, for example, an insulated gate bipolar transistor IGBT or a metal oxide semiconductor field effect transistor MOSFET. The uncontrollable diode in this application is a unidirectional semiconductor device. In a photovoltaic power supply scenario, because the power conversion apparatus usually performs unidirectional power flow, the first switching device and the third switching device only need to use the unidirectional semiconductor device. In an energy storage power supply scenario, the power conversion apparatus performs bidirectional energy flow, and therefore, the first switching device and the third switching device need to use the bidirectional semiconductor device. It may be understood that the power conversion apparatus is applicable to both the photovoltaic power supply scenario and the energy storage power supply scenario, and has strong applicability.

With reference to any one of the first aspect to the third possible implementation of the first aspect, in a fourth possible implementation, the power conversion apparatus further includes a bus voltage balancing circuit. A first end, a second end, and a third end of the bus voltage balancing circuit are respectively connected to a connection point between the first bus capacitor and the second bus capacitor, the positive direct current bus, and the negative direct current bus, and are configured to transfer electric energy stored in the first bus capacitor to the second bus capacitor, or transfer electric energy stored in the second bus capacitor to the first bus capacitor, to decrease a difference between a first bus voltage of the first bus capacitor and a second bus voltage of the second bus capacitor, thereby implementing half-bus voltage balancing. The bus voltage balancing circuit performs half-bus voltage balancing, and performs direct current energy conversion with each direct current conversion circuit, which is independent of each other and does not affect each other. A photovoltaic power generation application scenario is used as an example. When a direct current conversion circuit is controlled to control half-bus voltage balancing, a maximum power point tracking (maximum power point tracking, MPPT) feature of half-bus balancing usually needs to be sacrificed, that is, maximum power operation is abandoned. This causes an energy yield loss. However, in a manner of implementing half-bus voltage balancing by using the bus voltage balancing circuit, the MPPT feature of the direct current conversion circuit does not need to be sacrificed, thereby increasing energy yield of the power conversion apparatus.

With reference to the fourth possible implementation of the first aspect, in a fifth possible implementation, the bus voltage balancing circuit includes an energy storage element. The bus voltage balancing circuit is configured to: transfer the electric energy stored in the first bus capacitor to the energy storage element, and transfer the electric energy of the energy storage element to the second bus capacitor; or transfer the electric energy stored in the second bus capacitor to the energy storage element, and transfer the electric energy of the energy storage element to the first bus capacitor, to reduce a difference between the first bus voltage and the second bus voltage. Therefore, half-bus voltage balancing is implemented. Because the bus voltage balancing circuit performs half-bus voltage balancing, and performs direct current energy conversion with each direct current conversion circuit, which is independent of each other and does not affect each other, half-bus voltage balancing is implemented by using the bus voltage balancing circuit, and decoupling control may be implemented with each direct current conversion circuit. This ensures flexible energy control of the direct current conversion circuit, without sacrificing the MPPT feature of the direct current conversion circuit, thereby increasing energy yield of the power conversion apparatus.

With reference to the fifth possible implementation of the first aspect, in a sixth possible implementation, the energy storage element is a third power inductor. The bus voltage balancing circuit further includes a fifth switching device and a sixth switching device. One end of the third power inductor is connected to the first end of the bus voltage balancing circuit. The other end of the third power inductor is separately connected to the second end and the third end of the bus voltage balancing circuit through the fifth switching device and the sixth switching device. In this implementation, the bus voltage balancing circuit, that is, the BUCK-BOOST circuit, is simple, easy to control, and can improve stability of the power conversion apparatus.

With reference to the fifth possible implementation of the first aspect, in a seventh possible implementation, the energy storage element is a resonant capacitor. The bus voltage balancing circuit further includes a seventh switching device, an eighth switching device, a ninth switching device, a tenth switching device, and a resonant inductor. The seventh switching device and the eighth switching device are connected in series to form a first switching bridge arm. Two ends of the first switching bridge arm are respectively connected to the second end and the first end of the bus voltage balancing circuit. A first end of the seventh switching device is connected to the second end of the bus voltage balancing circuit. The ninth switching device and the tenth switching device are connected in series to form a second switching bridge arm. Two ends of the second switching bridge arm are respectively connected to the first end and the third end of the bus voltage balancing circuit. A first end of the ninth switching device is connected to the first end of the bus voltage balancing circuit. The resonant inductor and the resonant capacitor are connected in series between a midpoint of the first switching bridge arm and a midpoint of the second switching bridge arm. The midpoint of the first switching bridge arm is a connection point between the seventh switching device and the eighth switching device, and the midpoint of the second switching bridge arm is a connection point between the ninth switching device and the tenth switching device. The bus voltage balancing circuit in this implementation is a resonant switched capacitor circuit, and the bus voltage balancing circuit has various structures, thereby improving diversity of structures of the power conversion apparatus and improving flexibility.

With reference to any one of the first aspect to the seventh possible implementation of the first aspect, in an eighth possible implementation, the direct current power supply includes a photovoltaic panel, an energy storage battery, or a fuel cell. It may be understood that the power conversion apparatus is applicable to the photovoltaic power supply scenario, the energy storage power supply scenario, or a fuel cell power supply scenario, and has high applicability.

According to a second aspect, this application provides a control method, used to control the power conversion apparatus provided in any one of the second possible implementation to the seventh possible implementation of the first aspect. The method includes: When there is a deviation between the first bus voltage of the first bus capacitor and the second bus voltage of the second bus capacitor, that is, when the first bus voltage is not equal to the second bus voltage, the power conversion apparatus adjusts a duty cycle of the first switching device in the first direct current conversion circuit and/or a duty cycle of the third switching device in the second direct current conversion circuit, so that a difference between the first bus voltage and the second bus voltage decreases. In this control manner, no additional component or circuit needs to be added, and costs of the power conversion apparatus can be effectively reduced.

With reference to the second aspect, in a first possible implementation, when the first bus voltage is greater than the second bus voltage and a current of the power conversion apparatus flows from the direct current power supply to the load, the power conversion apparatus increases the duty cycle of the first switching device and/or decreases the duty cycle of the third switching device, to increase the second bus voltage and/or decrease the first bus voltage, thereby reducing the difference between the first bus voltage and the second bus voltage. This implements half-bus voltage balancing. In this implementation, the power conversion apparatus can implement half-bus voltage balancing only by adjusting a duty cycle of a controllable switch in at least one of the first direct current conversion circuit and the second direct current conversion circuit. A control manner is simple and easy to implement. In addition, in this control manner, no additional component or circuit needs to be added, and costs of the power conversion apparatus can be effectively reduced.

With reference to the second aspect, in a second possible implementation, when the first bus voltage is less than the second bus voltage and a current of the power conversion apparatus flows from the direct current power supply to the load, the power conversion apparatus increases the duty cycle of the third switching device and/or decreases the duty cycle of the first switching device, to increase the first bus voltage and/or decrease the second bus voltage, thereby reducing the difference between the first bus voltage and the second bus voltage. This implements half-bus voltage balancing. In this implementation, the power conversion apparatus can implement half-bus voltage balancing only by adjusting a duty cycle of a controllable switch in at least one of the first direct current conversion circuit and the second direct current conversion circuit. A control manner is simple and easy to implement. In addition, in this control manner, no additional component or circuit needs to be added, and costs of the power conversion apparatus can be effectively reduced.

With reference to the second aspect, in a third possible implementation, when the first bus voltage is greater than the second bus voltage and a current of the power conversion apparatus flows from the load to the direct current power supply, the power conversion apparatus decreases the duty cycle of the first switching device and/or increases the duty cycle of the third switching device. In this implementation, the power conversion apparatus can implement half-bus voltage balancing only by adjusting a duty cycle of a controllable switch in at least one of the first direct current conversion circuit and the second direct current conversion circuit. A control manner is simple and easy to implement. In addition, in this control manner, no additional component or circuit needs to be added, and costs of the power conversion apparatus can be effectively reduced.

With reference to the second aspect, in a fourth possible implementation, when the first bus voltage is less than the second bus voltage and a current of the power conversion apparatus flows from the load to the direct current power supply, the power conversion apparatus decreases the duty cycle of the third switching device and/or increases the duty cycle of the first switching device. In this implementation, the power conversion apparatus can implement half-bus voltage balancing only by adjusting a duty cycle of a controllable switch in at least one of the first direct current conversion circuit and the second direct current conversion circuit. A control manner is simple and easy to implement. In addition, in this control manner, no additional component or circuit needs to be added, and costs of the power conversion apparatus can be effectively reduced.

According to a third aspect, this application provides a control method, used to control the power conversion apparatus provided in any one of the fourth possible implementation to the seventh possible implementation of the first aspect. The method includes: When there is a deviation between the first bus voltage of the first bus capacitor and the second bus voltage of the second bus capacitor, the power conversion apparatus controls the bus voltage balancing circuit to transfer electric energy stored in a bus capacitor corresponding to the larger bus voltage in the first bus voltage and the second bus voltage to a bus capacitor corresponding to the smaller bus voltage, to reduce a difference between the first bus voltage and the second bus voltage. This implements half-bus voltage balancing. Because the bus voltage balancing circuit performs half-bus voltage balancing, and performs direct current energy conversion with each direct current conversion circuit, which is independent of each other and does not affect each other, half-bus voltage balancing is implemented by using the bus voltage balancing circuit, and decoupling control may be implemented with each direct current conversion circuit. This ensures flexible energy control of the direct current conversion circuit, without sacrificing the MPPT feature of the direct current conversion circuit, thereby increasing energy yield of the power conversion apparatus.

With reference to the third aspect, in a first possible implementation, when there is the deviation between the first bus voltage and the second bus voltage, the power conversion apparatus controls the bus voltage balancing circuit to transfer the electric energy stored in the bus capacitor corresponding to the larger bus voltage in the first bus voltage and the second bus voltage to the energy storage element, and transfer the electric energy of the energy storage element to the bus capacitor corresponding to the smaller bus voltage in the first bus voltage and the second bus voltage. Because the bus voltage balancing circuit performs half-bus voltage balancing, and performs direct current energy conversion with each direct current conversion circuit, which is independent of each other and does not affect each other, half-bus voltage balancing is implemented by using the bus voltage balancing circuit, and decoupling control may be implemented with each direct current conversion circuit. This ensures flexible energy control of the direct current conversion circuit, without sacrificing the MPPT feature of the direct current conversion circuit, thereby increasing energy yield of the power conversion apparatus.

With reference to the first possible implementation of the third aspect, in a second possible implementation, the energy storage element is the third power inductor, that is, the bus voltage balancing circuit is the BUCK-BOOST circuit provided in the sixth possible implementation of the first aspect. When the first bus voltage is greater than the second bus voltage, the power conversion apparatus controls the fifth switching device to be turned off after being turned on for first preset duration, and transfers, in a process in which the fifth switching device is turned on, the electric energy stored in the first bus capacitor to the third power inductor. After the fifth switching device is turned off, the power conversion apparatus controls the sixth switching device to be turned off after being turned on for second preset duration, and transfers, in a process in which the sixth switching device is turned on, the electric energy stored in the third power inductor to the second bus capacitor. It may be understood that the power conversion apparatus controls the fifth switching device and the sixth switching device in the bus voltage balancing circuit (that is, the BUCK-BOOST circuit) to implement electric energy transfer between the first bus capacitor, the third power inductor, and the second bus capacitor with reference to an energy storage capability of the third power inductor. This implements half-bus voltage balancing. Because the BUCK-BOOST circuit is simple and easy to control, stability of the power conversion apparatus can be improved.

With reference to the first possible implementation of the third aspect, in a third possible implementation, the energy storage element is the third power inductor, that is, the bus voltage balancing circuit is the BUCK-BOOST circuit provided in the sixth possible implementation of the first aspect. When the first bus voltage is less than the second bus voltage, the power conversion apparatus controls the sixth switching device to be turned off after being turned on for first preset duration, and transfers, in a process in which the sixth switching device is turned on, electric energy stored in the second bus capacitor to the third power inductor. After the sixth switching device is turned off, the power conversion apparatus controls the fifth switching device to be turned off after being turned on for second preset duration, and transfers, in a process in which the fifth switching device is turned on, the electric energy stored in the third power inductor to the first bus capacitor. It may be understood that the power conversion apparatus implements electric energy transfer between the first bus capacitor, the third power inductor, and the second bus capacitor through the bus voltage balancing circuit, that is, a BUCK-BOOST circuit. This implements half-bus voltage balancing. Because the BUCK-BOOST circuit is simple and easy to control, stability of the power conversion apparatus can be improved.

With reference to the first possible implementation of the third aspect, in a fourth possible implementation, the energy storage element is a resonant capacitor, that is, the bus voltage balancing circuit is the resonant switched capacitor circuit provided in the seventh possible implementation of the first aspect. When the first bus voltage is greater than the second bus voltage, the power conversion apparatus controls the seventh switching device and the ninth switching device to be turned off after being turned on for third preset duration, and transfers, in a process in which the seventh switching device and the ninth switching device are turned on, the electric energy stored in the first bus capacitor to the resonant capacitor. After the seventh switching device and the ninth switching device are turned off, the power conversion apparatus controls the eighth switching device and the tenth switching device to be turned off after being turned on for fourth preset duration, and transfers, in a process in which the eighth switching device and the tenth switching device are turned on, the electric energy stored in the resonant capacitor to the second bus capacitor. The power conversion apparatus controls the seventh switching device, the eighth switching device, the ninth switching device, and the tenth switching device in the bus voltage balancing circuit (that is, the resonant switched capacitor circuit) to implements electric energy transfer between the first bus capacitor, the resonant capacitor, and the second bus capacitor with reference to an energy storage capability of the resonant capacitor. This implements half-bus voltage balancing. The bus voltage balancing circuit has various structures, so that bus voltage balance control manners are diversified, thereby improving structure diversity and control manner diversity of the power conversion apparatus, and improving flexibility.

With reference to the first possible implementation of the third aspect, in a fifth possible implementation, the energy storage element is a resonant capacitor, that is, the bus voltage balancing circuit is the resonant switched capacitor circuit provided in the seventh possible implementation of the first aspect. When the first bus voltage is less than the second bus voltage, the power conversion apparatus controls the eighth switching device and the tenth switching device to be turned off after being turned on for third preset duration, and transfers, in a process in which the eighth switching device and the tenth switching device are turned on, the electric energy stored in the second bus capacitor to the resonant capacitor. After the eighth switching device and the tenth switching device are turned off, the power conversion apparatus controls the seventh switching device and the ninth switching device to be turned off after being turned on for fourth preset duration, and transfers, in a process in which the seventh switching device and the ninth switching device are turned on, the electric energy stored in the resonant capacitor to the first bus capacitor. It may be understood that the power conversion apparatus implements electric energy transfer between the first bus capacitor, the resonant capacitor, and the second bus capacitor through the bus voltage balancing circuit, that is, the resonant switched capacitor circuit. This implements half-bus voltage balancing. The bus voltage balancing circuit has various structures, so that bus voltage balance control manners are diversified, thereby improving structure diversity and control manner diversity of the power conversion apparatus, and improving flexibility.

According to a fourth aspect, this application provides a power supply system. The power supply system includes an inverter circuit and the power conversion apparatus provided in any one of the first aspect to the eighth possible implementation of the first aspect. The first output end and the second output end of the power conversion apparatus are respectively connected to a first input end and a second input end of the inverter circuit, and an output end of the inverter circuit is connected to a power grid. Further, the power supply system reduces costs of the power supply system by using a power conversion apparatus that reduces circuit costs, thereby improving market competitiveness of the power supply system.

With reference to the fourth aspect, in a first possible implementation, the inverter circuit further includes a third bus capacitor, a fourth bus capacitor, and a third input end of the inverter circuit. The third bus capacitor is connected between the first input end of the inverter circuit and the third input end of the inverter circuit. The fourth bus capacitor is connected between the third input end of the inverter circuit and the second input end of the inverter circuit. It may be understood that the inverter circuit in this implementation is a multi-level inverter circuit with various structures and high flexibility.

With reference to the fourth aspect, in a second possible implementation, the inverter circuit further includes a third input end of the inverter circuit, and the third input end of the inverter circuit is connected to a connection point between the first bus capacitor and the second bus capacitor. When there is a deviation between the first bus voltage and the second bus voltage, the inverter circuit outputs electric energy stored in the first bus capacitor and the second bus capacitor to the power grid. Electric energy output by a bus capacitor corresponding to the larger bus voltage in the first bus voltage and the second bus voltage to the power grid is greater than electric energy output by a bus capacitor corresponding to the smaller bus voltage to the power grid. Therefore, the larger bus voltage in the first bus voltage and the second bus voltage decreases, and a difference between the first bus voltage and the second bus voltage is further reduced. This implements half-bus voltage balancing. It can be understood that the power supply system may implement half-bus voltage balancing through the inverter circuit. In this control manner, no additional component or circuit needs to be added, and costs of the power conversion apparatus and the power supply system can be effectively reduced. In addition, because the direct current conversion circuit and the inverter circuit share the first bus capacitor and the second bus capacitor, a quantity of bus capacitors used in the power supply system can be reduced, thereby further reducing costs of the power supply system.

It should be understood that, for implementations and beneficial effects of the foregoing aspects of this application, reference may be made to each other.

### BRIEF DESCRIPTION OF DRAWINGS

FIG. 1a and FIG. 1b are schematic diagrams of structures of an inverter according to the conventional technology;
FIG. 2 is a schematic diagram of an application scenario of a power supply system according to this application;
FIG. 3 is a schematic diagram of a structure of a power conversion apparatus according to this application;
FIG. 4a is a schematic diagram of another structure of a power conversion apparatus according to this application;
FIG. 4b is a schematic diagram of another structure of a power conversion apparatus according to this application;
FIG. 5a is a schematic diagram of another structure of a power conversion apparatus according to this application;
FIG. 5b is a schematic diagram of another structure of a power conversion apparatus according to this application;
FIG. 5c is a schematic diagram of another structure of a power conversion apparatus according to this application;
FIG. 5d is a schematic diagram of another structure of a power conversion apparatus according to this application;
FIG. 5e is a schematic diagram of another structure of a power conversion apparatus according to this application;
FIG. 5f is a schematic diagram of another structure of a power conversion apparatus according to this application;
FIG. 6a is a schematic diagram of another structure of a power conversion apparatus according to this application;
FIG. 6b is a schematic diagram of another structure of a power conversion apparatus according to this application;
FIG. 6c is a schematic diagram of another structure of a power conversion apparatus according to this application;
FIG. 6d is a schematic diagram of another structure of a power conversion apparatus according to this application;
FIG. 6e is a schematic diagram of another structure of a power conversion apparatus according to this application;
FIG. 7 is a schematic diagram of a structure of a power supply system according to this application;
FIG. 8 is a schematic diagram of another structure of a power supply system according to this application;
FIG. 9 is a schematic diagram of still another structure of a power supply system according to this application;
FIG. 10 is a schematic diagram of yet another structure of a power supply system according to this application;
FIG. 11 is a schematic flowchart of a bus voltage control method of a power conversion apparatus according to this application; and
FIG. 12 is another schematic flowchart of a bus voltage control method of a power conversion apparatus according to this application.

### DESCRIPTION OF EMBODIMENTS

A power conversion apparatus and a power supply system provided in this application are applicable to different application scenarios, for example, a photovoltaic power supply scenario, an energy storage power supply scenario, a fuel cell power supply scenario, and a power supply scenario of an uninterrupted power supply (uninterrupted power supply, UPS). The following uses the photovoltaic power supply scenario as an example.

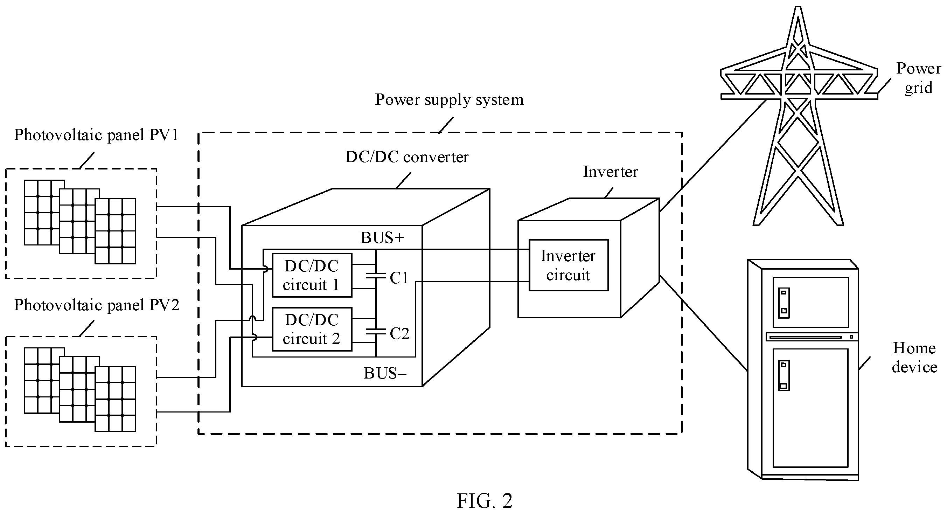

FIG. 2 is a schematic diagram of an application scenario of a power supply system according to this application. As shown in FIG. 2, in a photovoltaic power supply scenario, a power supply system provided in this application includes a DC/DC converter and an inverter. The DC/DC converter includes a first group of input ends, a second group of input ends, a DC/DC circuit 1, a DC/DC circuit 2, a positive direct current bus BUS+, a negative direct current bus BUS-, a positive bus capacitor C1, and a negative bus capacitor C2. The first group of input ends include a first group of first input ends and a first group of second input ends. The second group of input ends include a second group of first input ends and a second group of second input ends. The positive bus capacitor C1 and the negative bus capacitor C2 are connected in series between the positive direct current bus BUS+ and the negative direct current bus BUS-, and the positive direct current bus BUS+ and the negative direct current bus BUS- are respectively connected to a positive output end and a negative output end of the DC/DC converter. A positive input end of the DC/DC circuit 1 is connected to a positive electrode of a photovoltaic panel PV1 through a first group of positive input ends of the DC/DC converter, and two output ends are connected to two ends of the positive bus capacitor C1. A positive input end of the DC/DC circuit 2 is connected to a negative electrode of a photovoltaic panel PV2 through a second group of negative input ends of the DC/DC converter, and the two output ends are connected to two ends of the negative bus capacitor C2. A first group of negative input ends of the DC/DC converter are connected to a negative electrode of the photovoltaic panel PV1 and the negative direct current bus BUS-, and a second group of positive input ends of the DC/DC converter are connected to a positive electrode of the photovoltaic panel PV2 and the positive direct current bus BUS+. The inverter includes an inverter circuit. A positive input end and a negative input end of the inverter circuit are respectively connected to a positive output end and a negative output end of the DC/DC converter, and an output end of the inverter circuit is connected to an alternating current power grid or a home device through an output end of the inverter.

After the power supply system starts to operate, the DC/DC converter controls the DC/DC circuit 1 and the DC/DC circuit 2 to convert a direct current generated by the photovoltaic panel PV1 and the photovoltaic panel PV2 into a direct current that meets a target voltage, and output the direct current to the positive direct current bus BUS+ and the negative direct current bus BUS-. The inverter controls the inverter circuit to convert, based on the direct current obtained from the positive direct current bus BUS+ and the negative direct current bus BUS-, the direct current whose voltage value is the target voltage into an alternating current, to supply power to various types of electric devices such as an alternating current load (for example, the alternating current power grid or the home device). It may be understood that, based on a structure in which the positive bus capacitor C1 and the negative bus capacitor C2 are connected in series between the positive direct current bus BUS+ and the negative direct current bus BUS-, both a voltage of the positive bus capacitor C1 and a voltage of the negative bus capacitor C2 are less than a DC bus voltage (namely, a voltage between the positive direct current bus BUS+ and the negative direct current bus BUS-). Two output ends of the DC/DC circuit 1 are connected to two ends of the positive bus capacitor C1, and two output ends of the DC/DC circuit 2 are connected to two ends of the negative bus capacitor C2, so that both a voltage drop borne by the DC/DC circuit 1 and a voltage drop borne by the DC/DC circuit 2 are less than the DC bus voltage. This can reduce circuit costs of the DC/DC circuit 1 and the DC/DC circuit 2, reduce costs of the DC/DC converter, and further reduce costs of the power supply system. In this way, high applicability is achieved. The foregoing is merely an example of the application scenario of the power supply system provided in this application, and is not exhaustive. The application scenario is not limited in this application.

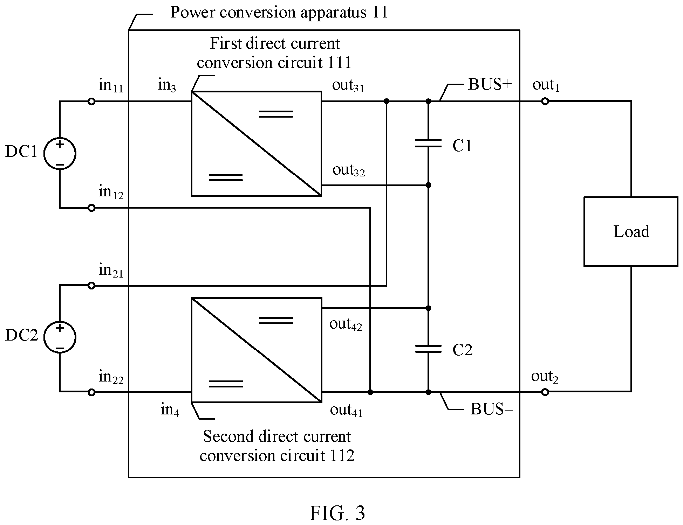

The following describes, with reference to FIG. 3 to FIG. 10, working principles of the power conversion apparatus and the power supply system provided in this application by using examples.

FIG. 3 is a schematic diagram of a structure of a power conversion apparatus according to this application. As shown in FIG. 3, a power conversion apparatus 11 includes a first group of input ends, a second group of input ends, a first direct current conversion circuit 111, a second direct current conversion circuit 112, a positive direct current bus BUS+, a negative direct current bus BUS-, a first bus capacitor C1, a second bus capacitor C2, and a first output end out₁ and a second output end out₂ of the power conversion apparatus 11. The first group of input ends in₁ are connected to a direct current power supply DC1, and the second group of input ends in₂ are connected to a direct current power supply DC2. The first output end out₁ and the second output end out₂ of the power conversion apparatus 11 are connected to a load. The direct current power supply DC1 and the direct current power supply DC2 include a photovoltaic panel, an energy storage battery, or a fuel cell. The load includes an inverter and a direct current power grid. In other words, the output end of the power conversion apparatus 11 may be directly connected to a direct current grid, or may be connected to an alternating current grid or another load through the inverter.

The first bus capacitor C1 and the second bus capacitor C2 are connected in series between the positive direct current bus BUS+ and the negative direct current bus BUS-. The positive direct current bus BUS+ is connected to the first output end out₁, and the negative direct current bus BUS- is connected to the second output end out₂. The first group of input ends in₁ of the power conversion apparatus 11 include a first group of first input ends in₁₁ and a first group of second input ends in₁₂. The first group of first input ends in₁₁ are connected to an input end in₃ of the first direct current conversion circuit 111. A first output end out₃₁ and a second output end out₃₂ of the first direct current conversion circuit 111 are respectively connected to two ends of the first bus capacitor C1. The first group of second input ends in₁₂ are connected to the negative direct current bus BUS-. The second group of input ends in₂ include a second group of first input ends in₂₁ and a second group of second input ends in₂₂. The second group of first input ends in₂₁ are connected to the positive direct current bus BUS+. The second group of second input ends in₂₂ are connected to an input end in₄ of the second direct current conversion circuit 112. A first output end out₄₁ and a second output end out₄₂ of the second direct current conversion circuit 112 are respectively connected to two ends of the second bus capacitor C2.

In this embodiment of this application, the power conversion apparatus 11 connects the two bus capacitors C1 and C2 in series between the positive direct current bus BUS+ and the negative direct current bus BUS-, connects the two output ends of the first direct current conversion circuit 111 to the first bus capacitor C1, and connects the two output ends of the second direct current conversion circuit 112 to the two ends of the second bus capacitor C2, to reduce voltage drop borne by each of the two direct current conversion circuits. This can reduce circuit costs of the two direct current conversion circuits, reduce costs of the power conversion apparatus 11, and further improve market competitiveness of the power conversion apparatus 11.

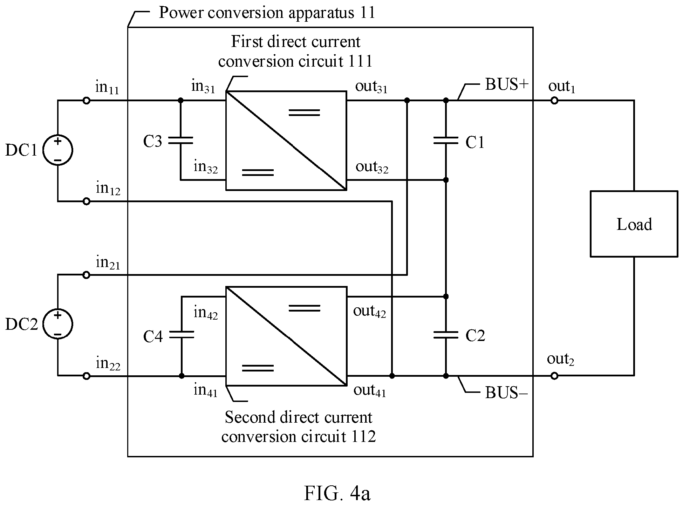

FIG. 4a is a schematic diagram of another structure of a power conversion apparatus according to this application. As shown in FIG. 4a, a power conversion apparatus 11 includes a first group of input ends in₁, a second group of input ends in₂, a first direct current conversion circuit 111, a second direct current conversion circuit 112, a positive direct current bus BUS+, a negative direct current bus BUS-, a first bus capacitor C1, a second bus capacitor C2, a first input capacitor C3, a second input capacitor C4, and a first output end out₁ and a second output end out₂ of the power conversion apparatus 11.

An input end in₃ of the first direct current conversion circuit 111 includes a first input end in₃₁ and a second input end in₃₂. One end of the first input capacitor C3 is connected to the first input end in₃₁ and a first group of first input ends in₁₁ of the first direct current conversion circuit 111. The other end of the first input capacitor C3 is connected to the second input end in₃₂ of the first direct current conversion circuit 111. An input end in₃ of the second direct current conversion circuit 112 includes a first input end in₄₁ and a second input end in₄₂. One end of the second input capacitor C4 is connected to the first input end in₄₁ and a second group of second input ends of the second direct current conversion circuit 112. The other end of the second input capacitor C4 is connected to the second input end in₄₂ of the second direct current conversion circuit 112. For descriptions of other parts of the power conversion apparatus 11, refer to descriptions of corresponding parts of the power conversion apparatus 11 shown in FIG. 3. Details are not described herein again.

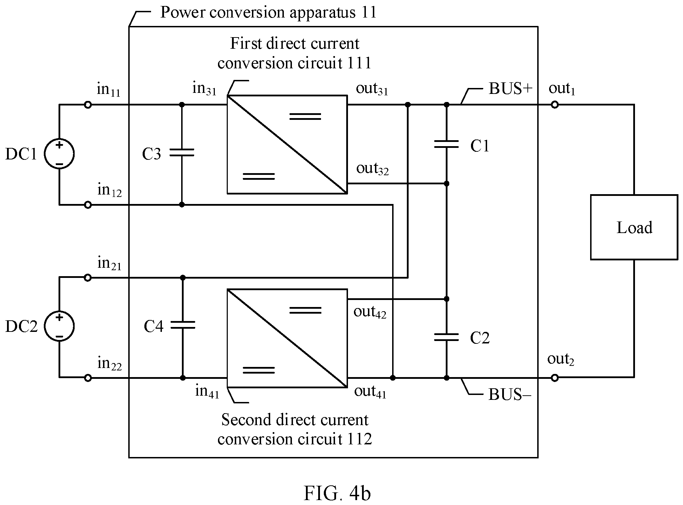

Optionally, the first input capacitor C3 may be further located between the first group of first input ends in₁₁ and a first group of second input ends in₁₂. The second input capacitor C4 may be further located between a second group of first input ends in₂₁ and a second group of second input ends in₂₂. For details, refer to the power conversion apparatus 11 shown in FIG. 4b.

In this embodiment of this application, the power conversion apparatus 11 connects the two bus capacitors C1 and C2 in series between the positive direct current bus BUS+ and the negative direct current bus BUS-, connects the two output ends of the first direct current conversion circuit 111 to the first bus capacitor C1, and connects the two output ends of the second direct current conversion circuit 112 to the two ends of the second bus capacitor C2, to reduce voltage drop borne by each of the two direct current conversion circuits. This can reduce circuit costs of the two direct current conversion circuits, reduce costs of the power conversion apparatus 11, and further improve market competitiveness of the power conversion apparatus 11.

Whether the input capacitor is located between the two input ends of the direct current conversion circuit or between each group of two input ends of the power conversion apparatus 11, a working principle of the power conversion apparatus 11 is the same. For ease of description, an example in which the input capacitor is located between the two input ends of the direct current conversion circuit is used below for description.

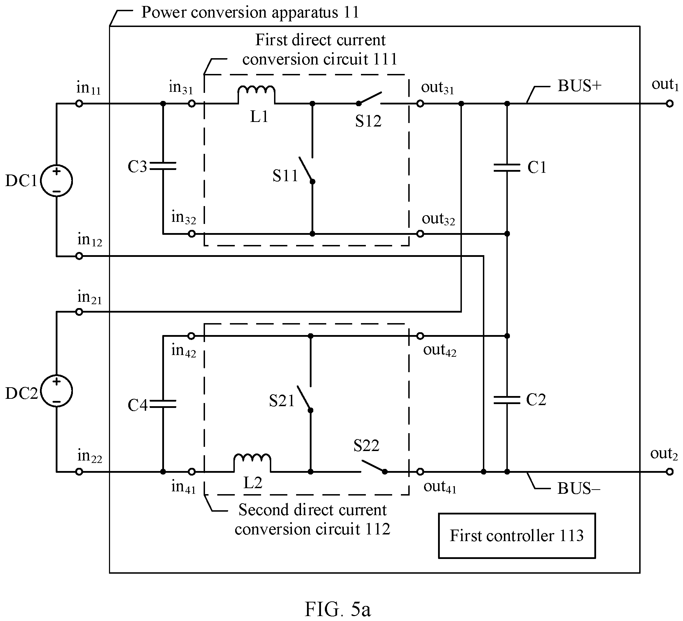

FIG. 5a is a schematic diagram of another structure of a power conversion apparatus according to this application. As shown in FIG. 5a, a power conversion apparatus 11 includes a first group of first input ends in₁₁, a first group of second input ends in₁₂, a second group of first input ends in₂₁, a second group of second input ends in₂₂, a first direct current conversion circuit 111, a second direct current conversion circuit 112, a positive direct current bus BUS+, a negative direct current bus BUS-, a first bus capacitor C1, a second bus capacitor C2, a first input capacitor C3, a second input capacitor C4, a first output end out₁ and a second output end out₂ of the power conversion apparatus 11, and a first controller 113.

The first direct current conversion circuit 111 includes a first power inductor L1, a first switching device S11, and a second switching device S12. One end of the first power inductor L1 is connected to a first input end in₃₁ of the first direct current conversion circuit 111. The other end of the first power inductor L1 is connected to a first output end out₃₁ of the first direct current conversion circuit 111 through the second switching device S12. One end of the first switching device S11 is connected to a second input end in₃₂ and a second output end out₃₂ of the first direct current conversion circuit 111. The other end of the first switching device S11 is connected to a connection point between the first power inductor L1 and the second switching device S12. The second direct current conversion circuit 112 includes a second power inductor L2, a third switching device S21, and a fourth switching device S22. One end of the second power inductor L2 is connected to a first input end in₄₁ of the second direct current conversion circuit 112. The other end of the second power inductor L2 is connected to a first output end out₄₁ of the second direct current conversion circuit 112 through the fourth switching device S22. One end of the third switching device S21 is connected to a second input end in₄₂ and a second output end out₄₂ of the second direct current conversion circuit 112. The other end of the third switching device S21 is connected to a connection point between the second power inductor L2 and the fourth switching device S22. Both the second switching device S12 and the fourth switching device S22 are uncontrollable diodes or controllable switching transistors. The first switching device S11 and the third switching device S21 are controllable switching transistors. The controllable switching transistor provided in this application is a bidirectional semiconductor device, for example, an IGBT or a metal oxide semiconductor field effect transistor (metal oxide semiconductor field effect transistor, MOSFET). A value relationship between a capacitance value of the first bus capacitor C1 and a capacitance value of the second bus capacitor C2 is not limited in this application.

It should be noted that, in a unidirectional energy flow scenario (for example, a photovoltaic power supply scenario), both the second switching device S12 and the fourth switching device S22 shown in FIG. 5a are diodes. A cathode of the second switching device S12 is connected to the first output end out₃₁ of the first direct current conversion circuit 111. An anode of the fourth switching device S22 is connected to the first output end out₄₁ of the second direct current conversion circuit 112. In a bidirectional energy flow scenario (for example, an energy storage power supply scenario), both the second switching device S12 and the fourth switching device S22 shown in FIG. 5a are controllable switching transistors. A conduction direction of a parasitic diode of the second switching device S12 is consistent with a conduction direction of the second switching device S12 when the second switching device S12 is a diode in the unidirectional energy flow scenario. A conduction direction of a parasitic diode of the fourth switching device S22 is consistent with a conduction direction of the fourth switching device S22 when the fourth switching device S22 is a diode in the unidirectional energy flow scenario.

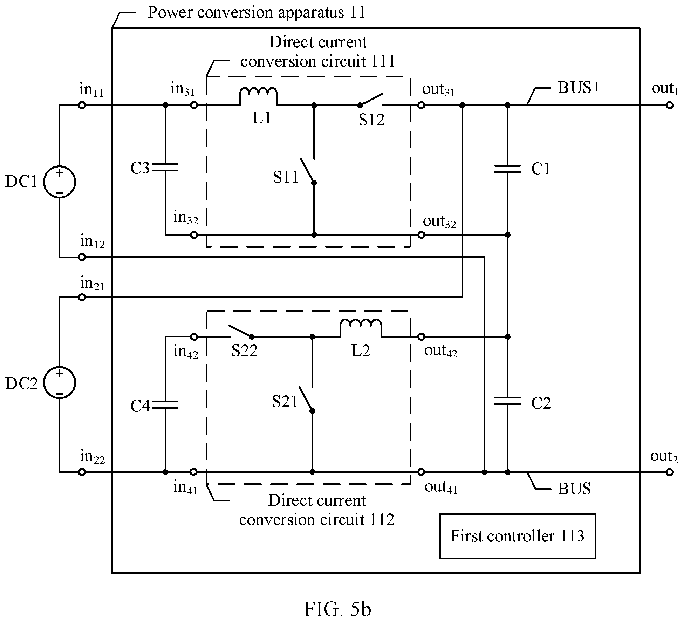

Optionally, the first direct current conversion circuit 111 and the second direct current conversion circuit 112 may alternatively use a circuit structure shown in FIG. 5b. As shown in FIG. 5b, a circuit structure of the first direct current conversion circuit 111 is consistent with a circuit structure of the first direct current conversion circuit 111 shown in FIG. 5a. The second direct current conversion circuit 112 includes a second power inductor L2, the third switching device S21, and the fourth switching device S22. One end of the fourth switching device S22 is connected to the second input end in₄₂ of the second direct current conversion circuit 112. The other end of the fourth switching device S22 is connected to the second output end out₄₂ of the second direct current conversion circuit 112 through the second power inductor L2. One end of the third switching device S21 is connected to the first input end in₄₁ and the first output end out₄₁ of the second direct current conversion circuit 112. The other end of the third switching device S21 is connected to a connection point between the second power inductor L2 and the fourth switching device S22.

It should be noted that, in a unidirectional energy flow scenario (for example, a photovoltaic power supply scenario), both the second switching device S12 and the fourth switching device S22 shown in FIG. 5b are diodes. A cathode of the second switching device S12 is connected to the first output end out₃₁ of the first direct current conversion circuit 111. A cathode of the fourth switching device S22 is connected to the second input end in₄₂ of the second direct current conversion circuit 112. In a bidirectional energy flow scenario (for example, an energy storage power supply scenario), both the second switching device S12 and the fourth switching device S22 shown in FIG. 5b are controllable switching transistors. A conduction direction of a parasitic diode of the second switching device S12 is consistent with a conduction direction of the second switching device S12 when the second switching device S12 is a diode in the unidirectional energy flow scenario. A conduction direction of a parasitic diode of the fourth switching device S22 is consistent with a conduction direction of the fourth switching device S22 when the fourth switching device S22 is a diode in the unidirectional energy flow scenario.

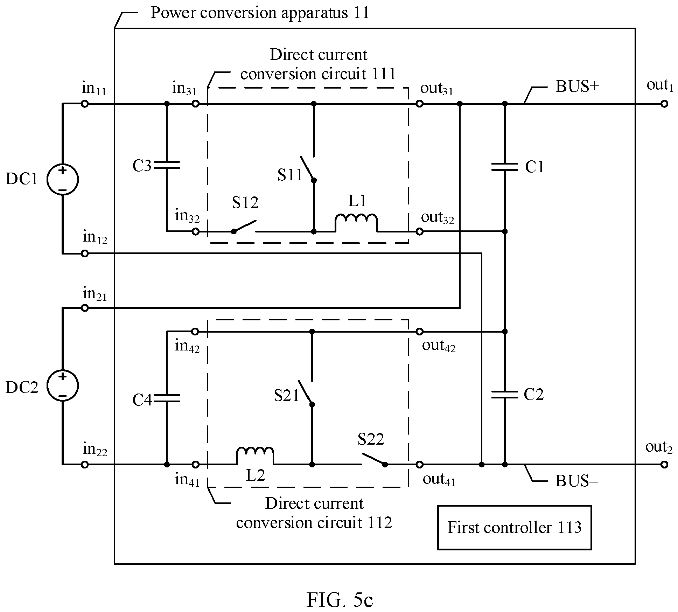

Optionally, the first direct current conversion circuit 111 and the second direct current conversion circuit 112 may alternatively use a circuit structure shown in FIG. 5c. As shown in FIG. 5c, the first direct current conversion circuit 111 includes the first power inductor L1, the first switching device S11, and the second switching device S12. One end of the second switching device S12 is connected to the second input end in₃₂ of the first direct current conversion circuit 111. The other end of the second switching device S12 is connected to the second output end out₃₂ of the first direct current conversion circuit 111 through the first power inductor L1. One end of the first switching device S11 is connected to the first input end in₃₁ and the first output end out₃₁ of the first direct current conversion circuit 111. The other end of the first switching device S11 is connected to a connection point between the first power inductor L1 and the second switching device S12. A circuit structure of the second direct current conversion circuit 112 is consistent with a circuit structure of the second direct current conversion circuit 112 shown in FIG. 5a.

It should be noted that, in a unidirectional energy flow scenario (for example, a photovoltaic power supply scenario), both the second switching device S12 and the fourth switching device S22 shown in FIG. 5c are diodes. An anode of the second switching device S12 is connected to the second input end in₃₂ of the first direct current conversion circuit 111. An anode of the fourth switching device S22 is connected to the first output end out₄₁ of the second direct current conversion circuit 112. In a bidirectional energy flow scenario (for example, an energy storage power supply scenario), both the second switching device S12 and the fourth switching device S22 shown in FIG. 5c are controllable switching transistors. A conduction direction of a parasitic diode of the second switching device S12 is consistent with a conduction direction of the second switching device S12 when the second switching device S12 is a diode in the unidirectional energy flow scenario. A conduction direction of a parasitic diode of the fourth switching device S22 is consistent with a conduction direction of the fourth switching device S22 when the fourth switching device S22 is a diode in the unidirectional energy flow scenario.

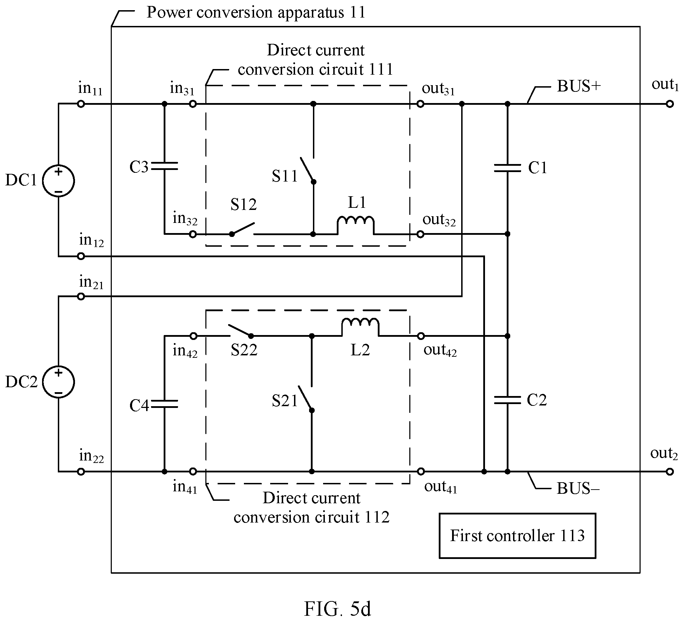

Optionally, the first direct current conversion circuit 111 and the second direct current conversion circuit 112 may alternatively use a circuit structure shown in FIG. 5d. As shown in FIG. 5d, a circuit structure of the first direct current conversion circuit 111 is consistent with a circuit structure of the first direct current conversion circuit 111 shown in FIG. 5c, and a circuit structure of the second direct current conversion circuit 112 is consistent with a circuit structure of the second direct current conversion circuit 112 shown in FIG. 5b.

It should be noted that, in a unidirectional energy flow scenario (for example, a photovoltaic power supply scenario), both the second switching device S12 and the fourth switching device S22 shown in FIG. 5d are diodes. An anode of the second switching device S12 is connected to the second input end in₃₂ of the first direct current conversion circuit 111. A cathode of the fourth switching device S22 is connected to the second input end in₄₂ of the second direct current conversion circuit 112. In a bidirectional energy flow scenario (for example, an energy storage power supply scenario), both the second switching device S12 and the fourth switching device S22 shown in FIG. 5d are controllable switching transistors. A conduction direction of a parasitic diode of the second switching device S12 is consistent with a conduction direction of the second switching device S12 when the second switching device S12 is a diode in the unidirectional energy flow scenario. A conduction direction of a parasitic diode of the fourth switching device S22 is consistent with a conduction direction of the fourth switching device S22 when the fourth switching device S22 is a diode in the unidirectional energy flow scenario.

In the four power conversion apparatuses 11 with different circuit structures shown in FIG. 5a to FIG. 5d, because the first bus capacitor C1 and the second bus capacitor C2 are connected in series between the positive direct current bus BUS+ and the negative direct current bus BUS-, generally, the first bus capacitor C1 and the second bus capacitor C2 each bear a half of a direct current bus voltage. In other words, voltage values borne by the first direct current conversion circuit 111 and the second direct current conversion circuit 112 both decrease by half. For example, when the direct current bus voltage is 1500 V, average voltages of the first bus capacitor C1 and the second bus capacitor C2 are both 750 V, that is, the voltage values borne by the first direct current conversion circuit 111 and the second direct current conversion circuit 112 are both reduced by half. Compared with the DC/DC circuit 1 and the DC/DC circuit 2 that each need two 1000 V IGBTs to bear the 1500 V direct current bus voltage shown in FIG. 1b, in this application, the first direct current conversion circuit 111 needs only one 1000 V IGBT S11, and the second direct current conversion circuit 112 needs only one 1000 V IGBT S21, to meet an application requirement of the 1500 V direct current bus voltage. It is clear that, when the direct current conversion circuit provided in this application and the DC/DC circuit shown in FIG. 1b use power semiconductor devices of a same voltage level, compared with a quantity of power semiconductor devices in the DC/DC circuit shown in FIG. 1b, a quantity of power semiconductor devices in the direct current conversion circuit provided in this application is reduced by 50%, so that circuit costs of the direct current conversion circuit can be significantly reduced, and costs of the power conversion apparatus 11 is significantly reduced. In addition, a decrease in the quantity of power semiconductor devices in the direct current conversion circuit may further effectively reduce circuit complexity of the power conversion apparatus 11, thereby reducing control complexity of the power conversion apparatus 11 and improving stability of the power conversion apparatus 11.

Because the capacitor cannot conduct a direct current, in a working process of the power conversion apparatus 11, it needs to be ensured that currents that are in the first direct current conversion circuit 111 and the second direct current conversion circuit 112 and that flow through a direct current bus midpoint M1 are exactly offset, to implement half-bus voltage balancing, that is, balancing between a first bus voltage of the first bus capacitor C1 and a second bus voltage of the second bus capacitor C2. Because the power conversion apparatus 11 shown in FIG. 5a to FIG. 5d implements half-bus voltage balancing in a same manner, for ease of description, the following uses the power conversion apparatus 11 shown in FIG. 5a as an example for description.

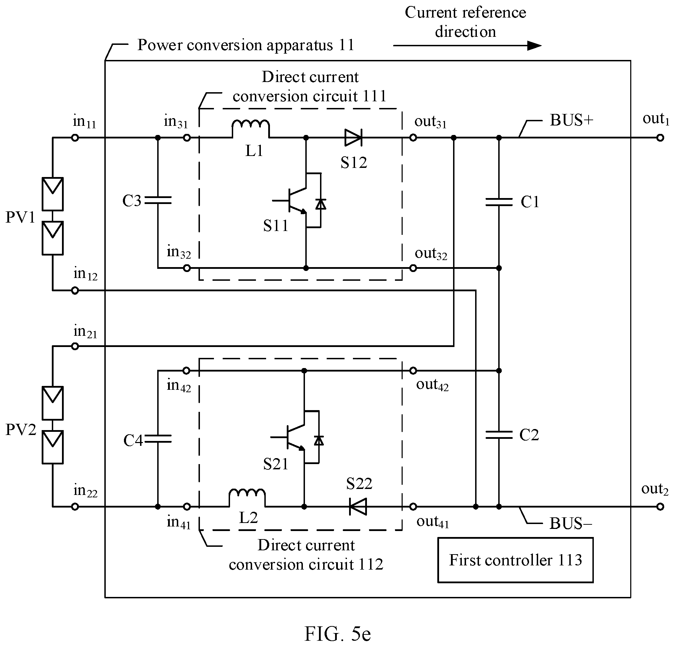

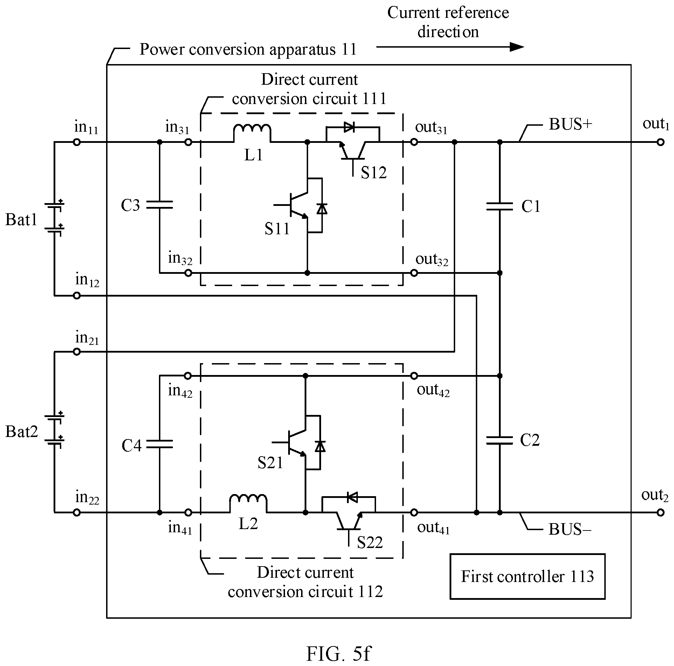

In an optional implementation, after the power conversion apparatus 11 works, the first controller 113 starts to obtain the first bus voltage of the first bus capacitor C1 and the second bus voltage of the second bus capacitor C2. When the first bus voltage is different from the second bus voltage, the first controller 113 adjusts a duty cycle of the first switching device S11 in the first direct current conversion circuit 111 and/or a duty cycle of the third switching device S21 in the second direct current conversion circuit 112, so that a difference between the first bus voltage and the second bus voltage decreases. This implements half-bus voltage balancing. Herein, for a specific implementation in which the power conversion apparatus 11 implements half-bus voltage balancing by adjusting the duty cycle of the first switching device S11 and/or the duty cycle of the third switching device S21, refer to the subsequent embodiments corresponding to FIG. 5e and FIG. 5f (that is, an embodiment developed in detail based on the power conversion apparatus 11 shown in FIG. 5a). Details are not described herein again.

It may be understood that the power conversion apparatus 11 may sample the first bus voltage of the first bus capacitor C1 and the second bus voltage of the second bus capacitor C2, to dynamically adjust a duty cycle of a controllable switch of at least one of the two direct current conversion circuits through closed-loop control, to implement half-bus voltage balancing. In this control manner, no additional component or circuit needs to be added, and costs of the power conversion apparatus 11 can be effectively reduced.

It should be noted that, when the direct current power supply DC1 and the direct current power supply DC2 are photovoltaic panels, the foregoing direct current conversion circuits implement conversion between output voltages of photovoltaic panels connected to the direct current conversion circuits and direct current buses (that is, the positive direct current bus BUS+ and the negative direct current bus BUS-), and are mainly configured to implement maximum power tracking of the photovoltaic panels connected to the direct current conversion circuits, to ensure efficient power generation of the photovoltaic panels. Therefore, in a case in which the direct current power supply DC 1 and the direct current power supply DC2 are photovoltaic panels, that is, in a photovoltaic power supply scenario, the power conversion apparatus 11 usually performs unidirectional power flow. When the direct current power supply DC1 and the direct current power supply DC2 are energy storage batteries, the foregoing direct current conversion circuits are configured to implement voltage matching between energy storage batteries connected to the direct current conversion circuits and the direct current bus, and perform charging and discharging management on the energy storage batteries connected to the direct current conversion circuits. Therefore, when the direct current power supply DC1 and the direct current power supply DC2 are energy storage batteries, that is, in an energy storage power supply scenario, the power conversion apparatus 11 performs bidirectional energy flow. Based on this, types of power semiconductor devices (that is, the second switching device and the fourth switching device) in the direct current conversion circuit in the photovoltaic power supply scenario are not exactly the same as types of power semiconductor devices in the direct current conversion circuit in the energy storage power supply scenario. For details, refer to the power conversion apparatus 11 shown in FIG. 5b and FIG. 5c.

For example, FIG. 5e is a schematic diagram of another structure of a power conversion apparatus according to this application. As shown in FIG. 5e, the direct current power supply DC1 and the direct current power supply DC2 are a photovoltaic panel PV1 and a photovoltaic panel PV2 respectively. The second switching device S12 and the fourth switching device S22 may both be SiC-SBDs. The first switching device S11 and the third switching device S21 may be IGBTs or MOSFETs. In this embodiment, the IGBT is used as an example to describe the first switching device S11 and the third switching device S21.

One end of the first power inductor L1 is connected to the first input end in₃₁ of the first direct current conversion circuit 111. The other end of the first power inductor L1 is connected to an anode of the SiC-SBD S12 and a drain of the IGBT S11. A cathode of the SiC-SBD S12 is connected to the first output end out₃₁ of the first direct current conversion circuit 111. A source of the IGBT S11 is connected to the second input end in₃₂ and the second output end out₃₂ of the first direct current conversion circuit 111. One end of the second power inductor L2 is connected to the first input end in₄₁ of the second direct current conversion circuit 112. The other end of the second power inductor L2 is connected to a cathode of the SiC-SBD S22 and a source of the IGBT S21. An anode of the SiC-SBD S22 is connected to the first output end out₄₁ of the second direct current conversion circuit 112. A drain of the IGBT S21 is connected to the second input end in₄₂ and the second output end out₄₂ of the second direct current conversion circuit 112.

In an optional implementation, after the power conversion apparatus 11 works, the first controller 113 starts to control the first direct current conversion circuit 111 to implement maximum power tracking for the photovoltaic panel PV1, and control the second direct current conversion circuit 112 to implement maximum power tracking for the photovoltaic panel PV2. In addition, the first controller 113 starts to obtain the first bus voltage of the first bus capacitor C1 and the second bus voltage of the second bus capacitor C2 in real time.

In an optional embodiment, when the first bus voltage is greater than the second bus voltage and the current of the power conversion apparatus 11 flows from the photovoltaic panel to the load (that is, a current flow direction of the power conversion apparatus 11 is the same as a current reference direction in FIG. 5e), the first controller 113 increases the duty cycle of the first switching device IGBT S11 and/or decreases the duty cycle of the third switching device IGBT S21.

For example, when the first bus voltage is greater than the second bus voltage and the current of the power conversion apparatus 11 flows from the photovoltaic panel to the load, the first controller 113 increases the duty cycle of the first switching device IGBT S11, so that the second bus voltage increases. Therefore, the difference between the first bus voltage and the second bus voltage decreases. This implements half-bus voltage balancing.

For example, when the first bus voltage is greater than the second bus voltage and the current of the power conversion apparatus 11 flows from the photovoltaic panel to the load, the first controller 113 decreases the duty cycle of the third switching device IGBT S21, so that the first bus voltage decreases. Therefore, the difference between the first bus voltage and the second bus voltage decreases. This implements half-bus voltage balancing.

For example, when the first bus voltage is greater than the second bus voltage and the current of the power conversion apparatus 11 flows from the photovoltaic panel to the load, the first controller 113 increases the duty cycle of the first switching device IGBT S11, and decreases the duty cycle of the third switching device IGBT S21, so that the first bus voltage decreases and the second bus voltage increases. Therefore, the difference between the first bus voltage and the second bus voltage decreases. This implements half-bus voltage balancing. It may be understood that duty cycles of controllable switching devices in the two direct current conversion circuits are simultaneously adjusted. This can effectively shorten duration required for half-bus voltage balancing, and further improve work efficiency of the power conversion apparatus 11.

Usually, the direct current conversion circuit works in an MPPT mode to ensure that the photovoltaic panel works at the maximum power. When there is a deviation in the half-bus voltage, the duty cycle of the first direct current converter or the second direct current converter needs to be adjusted to implement balancing of a half-bus. In this case, the direct current power conversion apparatus exits the MPPT mode, and an energy yield may be lost to some extent. However, an advantage is that no additional hardware circuit needs to be added, so that costs of the power conversion apparatus are low.

In another optional embodiment, when the first bus voltage is less than the second bus voltage and the current of the power conversion apparatus 11 flows from the photovoltaic panel to the load, the first controller 113 decreases the duty cycle of the first switching device IGBT S11 and/or increases the duty cycle of the third switching device IGBT S21.

For example, when the second bus voltage is greater than the first bus voltage and the current of the power conversion apparatus 11 flows from the photovoltaic panel to the load, the first controller 113 decreases the duty cycle of the first switching device IGBT S11, so that the second bus voltage decreases. Therefore, the difference between the first bus voltage and the second bus voltage decreases. This implements half-bus voltage balancing.

For example, when the second bus voltage is greater than the first bus voltage and the current of the power conversion apparatus 11 flows from the photovoltaic panel to the load, the first controller 113 increases the duty cycle of the third switching device IGBT S21, so that the first bus voltage increases. Therefore, the difference between the first bus voltage and the second bus voltage decreases. This implements half-bus voltage balancing.

For example, when the second bus voltage is greater than the first bus voltage and the current of the power conversion apparatus 11 flows from the photovoltaic panel to the load, the first controller 113 increases the duty cycle of the third switching device IGBT S21, and decreases the duty cycle of the first switching device IGBT S11, so that the second bus voltage decreases and the first bus voltage increases. Therefore, the difference between the first bus voltage and the second bus voltage decreases. This implements half-bus voltage balancing.

It may be understood that the power conversion apparatus 11 may sample the first bus voltage of the first bus capacitor C1 and the second bus voltage of the second bus capacitor C2, to dynamically adjust a duty cycle of a controllable switch of at least one of the two direct current conversion circuits through closed-loop control, to implement half-bus voltage balancing. In this control manner, no additional component or circuit needs to be added, and costs of the power conversion apparatus 11 can be effectively reduced.

For example, FIG. 5f is a schematic diagram of another structure of a power conversion apparatus according to this application. As shown in FIG. 5f, the direct current power supply DC1 and the direct current power supply DC2 are an energy storage battery Bat1 and an energy storage battery Bat2 respectively. The second switching device S12 and the fourth switching device S22 may be IGBTs or MOSFETs. The first switching device S11 and the third switching device S21 may be IGBTs or MOSFETs. In this embodiment, the IGBT is used as an example to describe the first switching device S11, the second switching device S12, the third switching device S21, and the fourth switching device S22.

One end of the first power inductor L1 is connected to the first input end in₃₁ of the first direct current conversion circuit 111. The other end of the first power inductor L1 is connected to a source of the IGBT S12 and a drain of the IGBT 511. A drain of the IGBT S12 is connected to the first output end out₃₁ of the first direct current conversion circuit 111. A source of the IGBT S11 is connected to the second input end in₃₂ and the second output end out₃₂ of the first direct current conversion circuit 111. One end of the second power inductor L2 is connected to the first input end in₄₁ of the second direct current conversion circuit 112. The other end of the second power inductor L2 is connected to a drain of the IGBT S22 and a source of the IGBT S21. A source of the IGBT S22 is connected to the first output end out₄₁ of the second direct current conversion circuit 112. A drain of the IGBT S21 is connected to the second input end in₄₂ and the second output end out₄₂ of the second direct current conversion circuit 112.

Herein, when the current of the power conversion apparatus 11 flows from the energy storage battery to the load, that is, when the current flow direction of the power conversion apparatus 11 is the same as the current reference direction in FIG. 5f, the energy storage battery works in a discharging mode. In this case, a specific implementation of implementing half-bus voltage balancing by the power conversion apparatus 11 shown in FIG. 5f is consistent with the description of the corresponding part in the embodiment shown in FIG. 5e. Details are not described herein again.

However, when the current of the power conversion apparatus 11 flows from the load to the energy storage battery, that is, when the current flow direction of the power conversion apparatus 11 is opposite to the current reference direction in FIG. 5f, the energy storage battery works in a charging mode. A balance control strategy of the half-bus voltage is opposite to that of the half-bus voltage in the discharging mode.

In an optional embodiment, when the first bus voltage is greater than the second bus voltage and the current of the power conversion apparatus 11 flows from the load to the energy storage battery, the first controller 113 decreases the duty cycle of the first switching device IGBT S 11 and/or increases the duty cycle of the third switching device IGBT S21.

For example, when the first bus voltage is greater than the second bus voltage and the current of the power conversion apparatus 11 flows from the load to the energy storage battery, the first controller 113 decreases the duty cycle of the first switching device IGBT S11, so that the second bus voltage increases. Therefore, the difference between the first bus voltage and the second bus voltage decreases. This implements half-bus voltage balancing.

For example, when the first bus voltage is greater than the second bus voltage and the current of the power conversion apparatus 11 flows from the load to the energy storage battery, the first controller 113 increases the duty cycle of the third switching device IGBT S21, so that the first bus voltage decreases. Therefore, the difference between the first bus voltage and the second bus voltage decreases. This implements half-bus voltage balancing.

For example, when the first bus voltage is greater than the second bus voltage and the current of the power conversion apparatus 11 flows from the load to the energy storage battery, the first controller 113 decreases the duty cycle of the first switching device IGBT S11, and increases the duty cycle of the third switching device IGBT S21, so that the first bus voltage decreases and the second bus voltage increases. Therefore, the difference between the first bus voltage and the second bus voltage decreases. This implements half-bus voltage balancing. It may be understood that duty cycles of controllable switches in the two direct current conversion circuits are simultaneously adjusted. This can effectively shorten duration required for half-bus voltage balancing, and further improve work efficiency of the power conversion apparatus 11.

In another optional embodiment, when the first bus voltage is less than the second bus voltage and the current of the power conversion apparatus 11 flows from the load to the energy storage battery, the first controller 113 increases the duty cycle of the first switching device IGBT S11 and/or decreases the duty cycle of the third switching device IGBT S21.

For example, when the second bus voltage is greater than the first bus voltage and the current of the power conversion apparatus 11 flows from the load to the energy storage battery, the first controller 113 increases the duty cycle of the first switching device IGBT S11, so that the second bus voltage decreases. Therefore, the difference between the first bus voltage and the second bus voltage decreases. This implements half-bus voltage balancing.

For example, when the second bus voltage is greater than the first bus voltage and the current of the power conversion apparatus 11 flows from the load to the energy storage battery, the first controller 113 decreases the duty cycle of the third switching device IGBT S21, so that the first bus voltage increases. Therefore, the difference between the first bus voltage and the second bus voltage decreases. This implements half-bus voltage balancing.

For example, when the second bus voltage is greater than the first bus voltage and the current of the power conversion apparatus 11 flows from the load to the energy storage battery, the first controller 113 decreases the duty cycle of the third switching device IGBT S21, and increases the duty cycle of the first switching device IGBT S11, so that the second bus voltage decreases and the first bus voltage increases. Therefore, the difference between the first bus voltage and the second bus voltage decreases. This implements half-bus voltage balancing.

In this embodiment of this application, the quantity of power semiconductor devices in the direct current conversion circuit decreases by 50%, which can significantly reduce circuit costs of the direct current conversion circuit, and further significantly reduce costs of the power conversion apparatus 11. In addition, a decrease in the quantity of power semiconductor devices in the direct current conversion circuit may further effectively reduce circuit complexity of the power conversion apparatus 11, thereby reducing control complexity of the power conversion apparatus 11 and improving stability of the power conversion apparatus 11. In addition, the power conversion apparatus 11 may dynamically adjust a duty cycle of a controllable switch of at least one direct current conversion circuit in the foregoing two direct current conversion circuits through closed-loop control, to implement half-bus voltage balancing. In this control manner, no additional component or circuit needs to be added, and costs of the power conversion apparatus 11 can be effectively reduced. In addition, the power conversion apparatus 11 provided in this application is applicable to a power supply scenario such as the photovoltaic power supply scenario or the energy storage power supply scenario, and has high applicability.

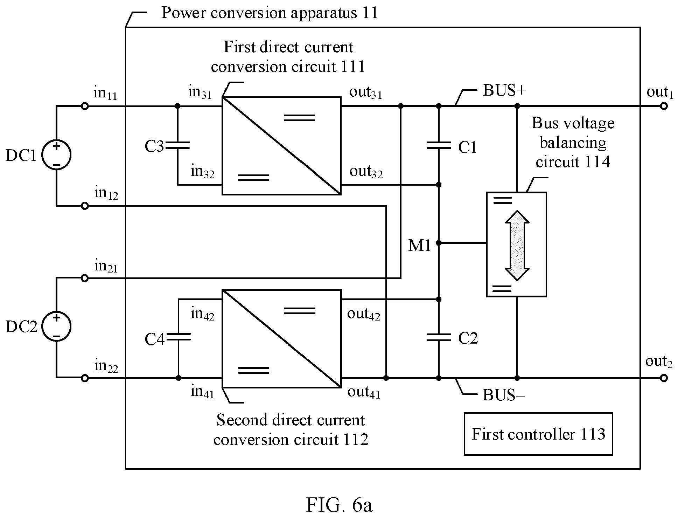

To implement half-bus capacitance balancing, the power conversion apparatus 11 may be implemented by adding a bus voltage balancing circuit to the power conversion apparatus 11 in addition to adjusting the duty cycle of the controllable switch in at least one of the first direct current conversion circuit 111 and the second direct current conversion circuit 112. For details, refer to the power conversion apparatus 11 shown in FIG. 6a to FIG. 6e.

FIG. 6a is a schematic diagram of another structure of a power conversion apparatus according to this application. As shown in FIG. 6a, a power conversion apparatus 11 includes a first group of first input ends in₁₁, a first group of second input ends in₁₂, a second group of first input ends in₂₁, a second group of second input ends in₂₂, a first direct current conversion circuit 111, a second direct current conversion circuit 112, a positive direct current bus BUS+, a negative direct current bus BUS-, a first bus capacitor C1, a second bus capacitor C2, a first input capacitor C3, a second input capacitor C4, a first output end out₁ and a second output end out₂ of the power conversion apparatus 11, a first controller 113, and a bus voltage balancing circuit 114.

A first end, a second end, and a third end of the bus voltage balancing circuit 114 are respectively connected to a bus midpoint M1, a positive direct current bus BUS+, and a negative direct current bus BUS-. The bus midpoint M1 is a connection point between the first bus capacitor C1 and the second bus capacitor C2. The bus voltage balancing circuit 114 is configured to transfer electric energy stored in the first bus capacitor C1 to the second bus capacitor C2, or transfer electric energy stored in the second bus capacitor C2 to the first bus capacitor C1. Specifically, the bus voltage balancing circuit 114 includes an energy storage element. The bus voltage balancing circuit 114 is configured to: transfer the electric energy stored in the first bus capacitor C1 to the energy storage element, and transfer the electric energy of the energy storage element to the second bus capacitor C2; or transfer the electric energy stored in the second bus capacitor C2 to the energy storage element, and transfer the electric energy of the energy storage element to the first bus capacitor C1. Herein, in addition to the description of the bus voltage balancing circuit 114, for descriptions of other parts of the power conversion apparatus 11, refer to the descriptions of the corresponding parts in the embodiment shown in FIG. 4a.

In an optional implementation, after the power conversion apparatus 11 works, the first controller 113 starts to obtain a first bus voltage of the first bus capacitor C1 and a second bus voltage of the second bus capacitor C2. When there is a deviation between the first bus voltage and the second bus voltage, the first controller 113 controls the bus voltage balancing circuit 114 to transfer electric energy stored in a bus capacitor corresponding to the larger bus voltage in the first bus voltage and the second bus voltage to the energy storage element, and transfer electric energy stored in the energy storage element to a bus capacitor corresponding to the smaller bus voltage, so that the larger bus voltage decreases, thereby reducing a difference between the first bus voltage and the second bus voltage. This implements half-bus voltage balancing.

In an alternative embodiment, when the first bus voltage is greater than the second bus voltage, the first controller 113 controls the bus voltage balancing circuit 114 to transfer a part of the electric energy stored in the first bus capacitor C1 to the energy storage element, and transfers the electric energy of the energy storage element to the second bus capacitor C2, so that the difference between the first bus voltage and the second bus voltage decreases. This implements half-bus voltage balancing.

In another optional embodiment, when the first bus voltage is less than the second bus voltage, the first controller 113 controls the bus voltage balancing circuit 114 to transfer a part of the electric energy stored in the second bus capacitor C2 to the energy storage element, and transfers the electric energy of the energy storage element to the first bus capacitor C1, so that the difference between the first bus voltage and the second bus voltage decreases. This implements half-bus voltage balancing.

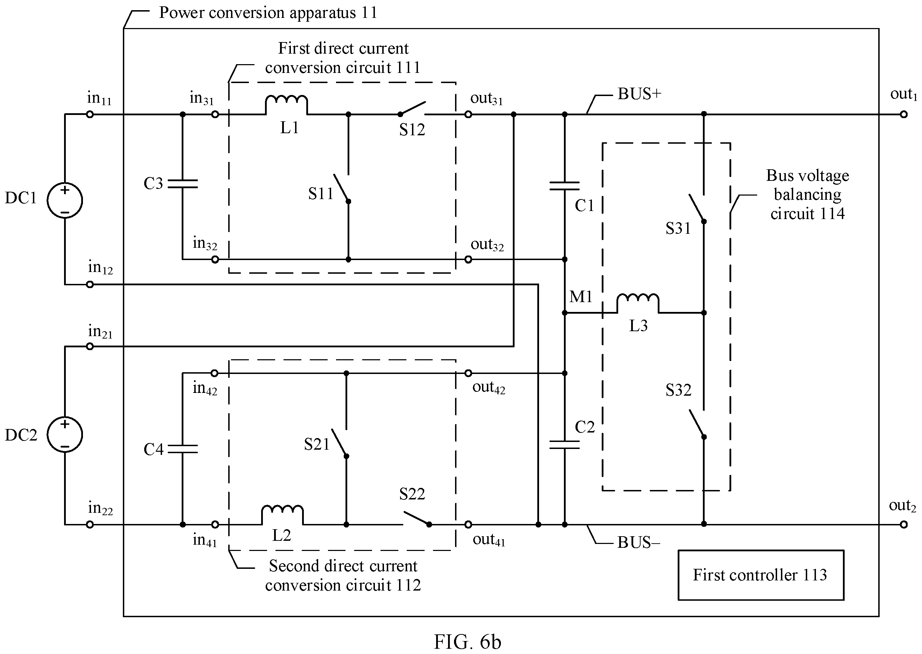

Herein, for a detailed implementation of a specific circuit structure of the bus voltage balancing circuit 114, and a detailed implementation that the power conversion apparatus 11 transfers electric energy between the first bus capacitor C1, the energy storage element, and the second bus capacitor C2 through the bus voltage balancing circuit 114, to implement half-bus voltage balancing, refer to descriptions of the embodiments corresponding to FIG. 6b to FIG. 6e. Details are not described herein again.

FIG. 6b is a schematic diagram of another structure of a power conversion apparatus according to this application. As shown in FIG. 6b, the bus voltage balancing circuit 114 includes a third power inductor L3, a fifth switching device S31, and a sixth switching device S32. In this embodiment, the third power inductor L3 is an energy storage element. One end of the third power inductor L3 is connected to a first end of the bus voltage balancing circuit 114, and the other end of the third power inductor L3 is connected to a second end and a third end of the bus voltage balancing circuit 114 through the fifth switching device S31 and the sixth switching device S32 respectively. Herein, for a connection relationship of other parts of the power conversion apparatus 11 shown in FIG. 6b except the bus voltage balancing circuit 114, refer to descriptions of corresponding parts of the power conversion apparatus 11 shown in FIG. 5a.

In an optional embodiment, when the first bus voltage is greater than the second bus voltage, the first controller 113 controls the fifth switching device S31 to be turned off after being turned on for first preset duration. In a process in which the fifth switching device S31 is turned on, the third power inductor L3 is charged by using the electric energy stored in the first bus capacitor C1 through the fifth switching device S31. In this way, a part of the energy stored in the first bus capacitor C1 is transferred to the third power inductor L3. After the fifth switching device S31 is turned off, the first controller 113 controls the sixth switching device S32 to be turned off after being turned on for second preset duration. In a process in which the sixth switching device S32 is turned on, because a current direction of the inductor cannot change suddenly, the electric energy stored in the third power inductor L3 charges the second bus capacitor C2 through the sixth switching device S32. In this way, the electric energy stored in the third power inductor L3 is transferred to the second bus capacitor C2, so that a difference between the first bus voltage and the second bus voltage decreases. This implements half-bus voltage balancing. It should be noted that the first preset duration and the second preset duration may be understood as turn-on time in conventional pulse width modulation (pulse width modulation, PWM) control, and the first controller may flexibly and dynamically adjust time of the first preset duration and the second preset duration, and implement half-bus voltage balancing control on the power conversion apparatus by controlling the switching device for a plurality of times.

In another optional embodiment, when the first bus voltage is less than the second bus voltage, the first controller 113 controls the sixth switching device S32 to be turned off after being turned on for the first preset duration. In a process in which the sixth switching device S32 is turned on, the third power inductor L3 is charged by using the electric energy stored in the second bus capacitor C2 through the sixth switching device S32, so that a part of the electric energy stored in the second bus capacitor C2 is transferred to the third power inductor L3. After the sixth switching device S32 is turned off, the first controller 113 controls the fifth switching device S31 to be turned off after being turned on for second preset duration. In a process in which the fifth switching device S31 is turned on, because the current direction of the inductor cannot change suddenly, the electric energy stored in the third power inductor L3 charges the first bus capacitor C1 through the fifth switching device S31. In this way, the electric energy stored in the third power inductor L3 is transferred to the first bus capacitor C1. Therefore, the difference between the first bus voltage and the second bus voltage decreases. This implements half-bus voltage balancing.

It may be understood that the power conversion apparatus 11 implements electric energy transfer between the first bus capacitor C1, the third power inductor L3, and the second bus capacitor C2 through the bus voltage balancing circuit 114 shown in FIG. 6b, that is, a BUCK-BOOST circuit. This implements half-bus voltage balancing. The bus voltage balancing circuit 114 implements half-bus voltage balancing, and may implement decoupling control with each direct current conversion circuit, to ensure flexible energy control of the direct current conversion circuit, thereby implementing flexible management of the direct current power supply, for example, MPPT without sacrificing a photovoltaic panel, or maximum energy utilization of an energy storage battery.

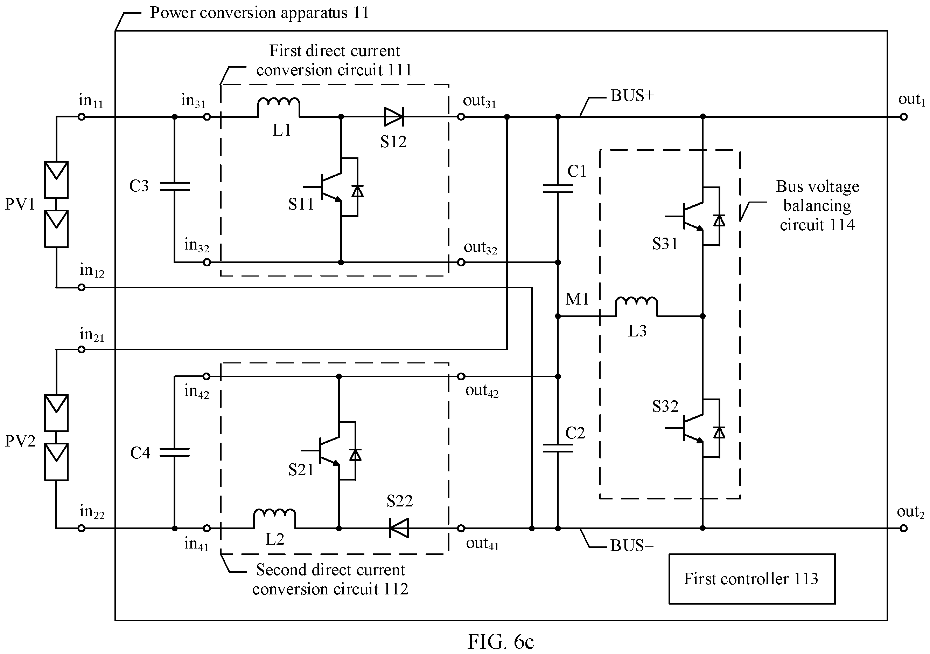

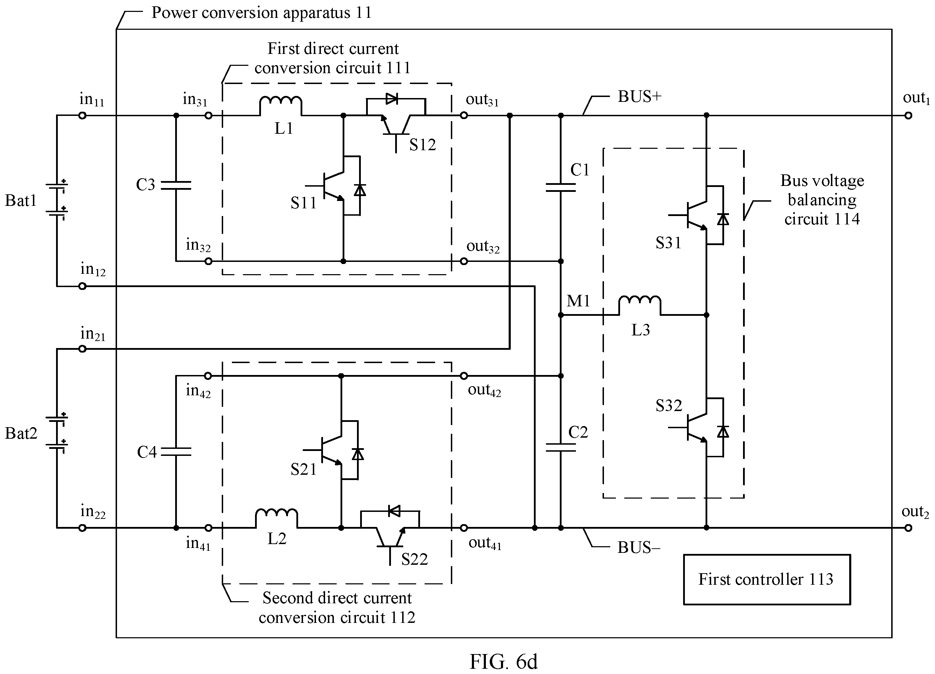

Refer to FIG. 6c and FIG. 6d. The following separately describes specific structures of the power conversion apparatus 11 shown in FIG. 6b in a photovoltaic power supply scenario and an energy storage power supply scenario.

FIG. 6c is a schematic diagram of another structure of a power conversion apparatus according to this application. As shown in FIG. 6c, the direct current power supply DC1 and the direct current power supply DC2 are a photovoltaic panel PV1 and a photovoltaic panel PV2 respectively, and the fifth switching device S31 and the sixth switching device S32 may be IGBTs or MOSFETs. In this embodiment, the IGBT is used as an example to describe the fifth switching device S31 and the sixth switching device S32.

One end of the third power inductor L3 is connected to the first end of the bus voltage balancing circuit 114. The other end of the third power inductor L3 is connected to a source of the IGBT S31 and a drain of the IGBT S32. A drain of the IGBT S31 is connected to the second end of the bus voltage balancing circuit 114, and a source of the IGBT S32 is connected to the third end of the bus voltage balancing circuit 114. Herein, for a specific structure and a connection relationship of another part of the power conversion apparatus 11 except the bus voltage balancing circuit 114, refer to descriptions of a corresponding part of the power conversion apparatus 11 shown in FIG. 5b.

After the power conversion apparatus 11 starts to work, the first controller 113 starts to control the first direct current conversion circuit 111 to implement maximum power tracking for the photovoltaic panel PV1, to ensure high-efficient power generation of the photovoltaic panel PV1, and controls the second direct current conversion circuit 112 to implement maximum power tracking for the photovoltaic panel PV2, to ensure high-efficient power generation of the photovoltaic panel PV2. In addition, the first controller 113 starts to obtain the first bus voltage of the first bus capacitor C1 and the second bus voltage of the second bus capacitor C2. In addition, when there is a deviation between the first bus voltage and the second bus voltage, working status of the IGBT S31 and the IGBT S32 are controlled, so that electric energy is transferred between the first bus capacitor C1, the third power inductor L3, and the second bus capacitor C2. Therefore, a difference between the first bus voltage and the second bus voltage decreases. This implements half-bus voltage balancing.

Herein, for a specific implementation in which the first controller 113 controls the IGBT S31 and the IGBT S32 to transfer electric energy between the first bus capacitor C1, the third power inductor L3, and the second bus capacitor C2, refer to descriptions of corresponding parts in the embodiment shown in FIG. 6b.

FIG. 6d is a schematic diagram of another structure of a power conversion apparatus according to this application. As shown in FIG. 6d, the direct current power supply DC1 and the direct current power supply DC2 are an energy storage battery Bat1 and an energy storage battery Bat2 respectively, and the fifth switching device S31 and the sixth switching device S32 may be IGBTs or MOSFETs. In this embodiment, the IGBT is used as an example to describe the fifth switching device S31 and the sixth switching device S32.

One end of the third power inductor L3 is connected to the first end of the bus voltage balancing circuit 114. The other end of the third power inductor L3 is connected to a source of the IGBT S31 and a drain of the IGBT S32. A drain of the IGBT S31 is connected to the second end of the bus voltage balancing circuit 114, and a source of the IGBT S32 is connected to the third end of the bus voltage balancing circuit 114. Herein, for a specific structure and a connection relationship of another part of the power conversion apparatus 11 except the bus voltage balancing circuit 114, refer to descriptions of a corresponding part of the power conversion apparatus 11 shown in FIG. 5c.

After the power conversion apparatus 11 starts to work, the first controller 113 starts to obtain a battery voltage (or remaining power) of the energy storage battery Bat1 and a battery voltage (or remaining power) of the energy storage battery Bat2, controls, based on a value relationship between the battery voltage (or remaining power) of the energy storage battery Bat1 and a target battery voltage (or target remaining power), the first direct current conversion circuit 111 to implement charging and discharging control on the energy storage battery Bat1, to implement precise management on the energy storage battery Bat1 ; and controls, based on a value relationship between the battery voltage (or remaining power) of the energy storage battery Bat2 and the target battery voltage (or target remaining power), the second direct current conversion circuit 112 to implement charging and discharging control on the energy storage battery Bat2, to implement precise management on the energy storage battery Bat2. In addition, the first controller 113 starts to obtain the first bus voltage of the first bus capacitor C1 and the second bus voltage of the second bus capacitor C2, and when the first bus voltage deviates from the second bus voltage, controls working states of the IGBT S31 and the IGBT S32, so that electric energy is transferred between the first bus capacitor C1, the third power inductor L3, and the second bus capacitor C2. Therefore, the difference between the first bus voltage and the second bus voltage decreases. This implements half-bus voltage balancing.

Herein, for a specific implementation in which the first controller 113 controls the IGBT S31 and the IGBT S32 to transfer electric energy between the first bus capacitor C1, the third power inductor L3, and the second bus capacitor C2, refer to descriptions of corresponding parts in the embodiment shown in FIG. 6b.

In this embodiment of this application, the power conversion apparatus 11 can effectively reduce a quantity of power semiconductor devices in the direct current conversion circuit, to reduce costs of the power conversion apparatus 11, thereby improving market competitiveness of the power conversion apparatus 11. In addition, the power conversion apparatus 11 implements electric energy transfer between the first bus capacitor C1, the third power inductor L3, and the second bus capacitor C2 through the bus voltage balancing circuit 114, that is, the BUCK-BOOST circuit. This implements half-bus voltage balancing. The bus voltage balancing circuit 114 implements half-bus voltage balancing, and may implement decoupling control with each direct current conversion circuit, to ensure flexible energy control of the direct current conversion circuit, thereby implementing flexible management of the direct current power supply.

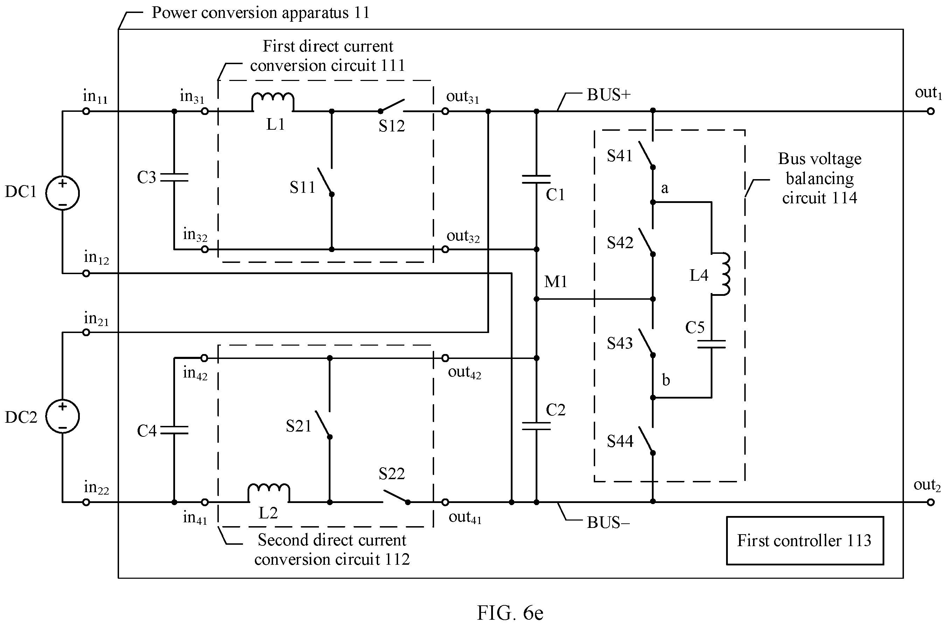

FIG. 6e is a schematic diagram of another structure of a power conversion apparatus according to this application. As shown in FIG. 6e, the bus voltage balancing circuit 114 includes a resonant capacitor C5, a resonant inductor L4, a seventh switching device S41, an eighth switching device S42, a ninth switching device S43, and a tenth switching device S44. In this embodiment, the resonant capacitor C5 is an energy storage element. The seventh switching device S41 and the eighth switching device S42 are connected in series to form a first switching bridge arm. Two ends of the first switching bridge arm are respectively connected to the second end and the first end of the bus voltage balancing circuit 114. A first end of the seventh switching device S41 is connected to the second end of the bus voltage balancing circuit 114. The ninth switching device S43 and the tenth switching device S44 are connected in series to form a second switching bridge arm. Two ends of the second switching bridge arm are respectively connected to the first end and the third end of the bus voltage balancing circuit 114. A first end of the ninth switching device S43 is connected to the first end of the bus voltage balancing circuit 114. The resonant inductor L4 and the resonant capacitor C5 are connected in series between a midpoint a of the first switching bridge arm and a midpoint b of the second switching bridge arm. The midpoint a of the first switching bridge arm is a series connection point between the seventh switching device S41 and the eighth switching device S42. The midpoint b of the second switching bridge arm is a series connection point between the ninth switching device S43 and the tenth switching device S44. Herein, for a connection relationship of other parts of the power conversion apparatus 11 shown in FIG. 6e except the bus voltage balancing circuit 114, refer to descriptions of corresponding parts of the power conversion apparatus 11 shown in FIG. 5a.

In an optional embodiment, when the first bus voltage is greater than the second bus voltage, the first controller 113 controls the seventh switching device S41 and the ninth switching device S43 to be turned off after the seventh switching device S41 and the ninth switching device S43 are turned on for third preset duration. Because inductance of the resonant inductor L4 is small, in a process in which the seventh switching device S41 and the ninth switching device S43 are turned on, it may be considered that electric energy stored in the first bus capacitor C1 charges the resonant capacitor C5 through the seventh switching device S41 and the ninth switching device S43, so that the electric energy stored in the first bus capacitor C1 is transferred to the resonant capacitor C5. After the seventh switching device S41 and the ninth switching device S43 are turned off, the first controller 113 controls the eighth switching device S42 and the tenth switching device S44 to be turned off after being turned on for fourth preset duration. In a process in which the eighth switching device S42 and the tenth switching device S44 are turned on, the electric energy stored in the resonant capacitor C5 charges the second bus capacitor C2 through the eighth switching device S42 and the tenth switching device S44, so that the electric energy stored in the resonant capacitor C5 is transferred to the second bus capacitor C2. Therefore, the difference between the first bus voltage and the second bus voltage decreases. This implements half-bus voltage balancing. Similarly, the third preset duration and the fourth preset duration may be understood as turn-on time in conventional PWM control, and the first controller may flexibly and dynamically adjust time of the third preset duration and the fourth preset duration, and implement half-bus voltage balancing control on the power conversion apparatus by controlling the switching device for a plurality of times.

In another optional embodiment, when the first bus voltage is less than the second bus voltage, the first controller 113 controls the tenth switching device S44 and the eighth switching device S42 to be turned off after being turned on for the third preset duration. Because the inductance of the resonant inductor L4 is small, in a process in which the tenth switching device S44 and the eighth switching device S42 are turned on, it may be considered that electric energy stored in the second bus capacitor C2 charges the resonant capacitor C5 through the tenth switching device S44 and the eighth switching device S42, so that the electric energy stored in the second bus capacitor C2 is transferred to the resonant capacitor C5. After the tenth switching device S44 and the eighth switching device S42 are turned off, the first controller 113 controls the ninth switching device S43 and the seventh switching device S41 to be turned off after being turned on for the fourth preset duration. In a process in which the ninth switching device S43 and the seventh switching device S41 are turned on, the electric energy stored in the resonant capacitor C5 charges the first bus capacitor C1 through the ninth switching device S43 and the seventh switching device S41, so that the electric energy stored in the resonant capacitor C5 is transferred to the first bus capacitor C1. Therefore, the difference between the first bus voltage and the second bus voltage decreases. This implements half-bus voltage balancing.

It may be understood that the power conversion apparatus 11 implements electric energy transfer between the first bus capacitor C1, the resonant capacitor C5, and the second bus capacitor C2 through the bus voltage balancing circuit 114 shown in FIG. 6e, that is, the resonant switched capacitor circuit (resonant switched capacitor circuit, RSCC). This implements half-bus voltage balancing. The bus voltage balancing circuit implements half-bus voltage balancing, and may implement decoupling control with each direct current conversion circuit, to ensure flexible energy control of the direct current conversion circuit, thereby implementing flexible management of the direct current power supply, for example, MPPT without sacrificing a photovoltaic panel, or maximum energy utilization of an energy storage battery. In addition, the bus voltage balancing circuit 114 has various structures, so that the power conversion apparatus 11 has more diversified structures and high flexibility.

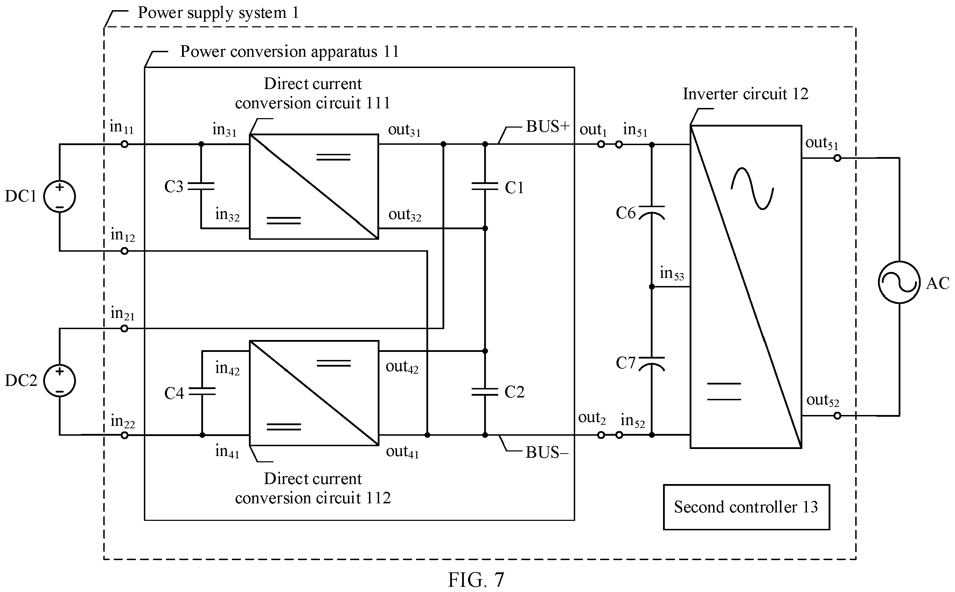

FIG. 7 is a schematic diagram of a structure of a power supply system according to this application. As shown in FIG. 7, a power supply system 1 includes an inverter circuit 12 and a power conversion apparatus 11 shown in FIG. 4a. A first output end out₁ and a second output end out₂ of the power conversion apparatus 11 are respectively connected to a first input end in₅₁ and a second input end in₅₂ of the inverter circuit 12. A first output end out₅₁ and a second output end out₅₂ of the inverter circuit 12 are connected to an alternating current power grid AC. Optionally, the inverter circuit 12 further includes a third bus capacitor C6, a fourth bus capacitor C7, and a third input end in₅₃ of the inverter circuit 12. The third bus capacitor C6 is located between the first input end in₅₁ and the third input end in₅₃ of the inverter circuit 12. The fourth bus capacitor C7 is located between the third input end in₅₃ and the second input end in₅₂ of the inverter circuit 12. The inverter circuit 12 is a multi-level inverter circuit. For descriptions of other parts of the power conversion apparatus 11, refer to descriptions of corresponding parts in the embodiment shown in FIG. 4a. Details are not described herein again.

The power supply system 1 further includes a second controller 13. The second controller 13 and a first controller 113 in the power conversion apparatus 11 may be a same controller, or may be two controllers that are independent of each other. This is not limited in this application. It should be noted that the inverter circuit 12 and the power conversion apparatus 11 may be located inside a same device, to form an inverter together. In this case, the second controller 13 and the first controller 113 are the same controller. The inverter circuit 12 may also be independently located in the inverter, and the inverter and the power conversion apparatus 11 are independent of each other. In this case, the second controller 13 may be a controller in the inverter, and is independent of the first controller 113.

In an optional implementation, in a case in which the inverter circuit 12 and the power conversion apparatus 11 jointly form the inverter, after the power supply system 1 starts to work, the second controller 13 further obtains a first bus voltage of the first bus capacitor C1 and a second bus voltage of the second bus capacitor C2 in addition to controlling the power conversion apparatus 11 and the inverter circuit 12 to convert a direct current of a direct current power supply connected to the input end of the power conversion apparatus 11 into an alternating current that meets an requirement of the alternating current power grid AC. When there is a deviation between the first bus voltage and the second bus voltage, the second controller 13 controls a duty cycle of a controllable switch in the first direct current conversion circuit 111 or the second direct current conversion circuit 112, so that a difference between the first bus voltage and the second bus voltage decreases. This implements half-bus voltage balancing. Herein, for a specific implementation in which the second controller 13 implements half-bus voltage balancing by adjusting the duty cycle of the direct current conversion circuit, refer to descriptions of corresponding parts in the embodiments shown in FIG. 5a to FIG. 5f.

In another optional implementation, in a case in which the inverter circuit 12 is independently located in the inverter, after the power supply system 1 starts to work, the first controller 113 further obtains the first bus voltage of the first bus capacitor C1 and the second bus voltage of the second bus capacitor C2 in addition to controlling the power conversion apparatus 11 to perform direct current conversion on a direct current of a direct current power supply connected to the input end of the power conversion apparatus 11. When there is a deviation between the first bus voltage and the second bus voltage, the first controller 113 controls a duty cycle of a controllable switch in the first direct current conversion circuit 111 or the second direct current conversion circuit 112, so that a difference between the first bus voltage and the second bus voltage decreases. This implements half-bus voltage balancing. Then, the second controller 13 controls the inverter circuit 12 to convert the direct current output by the power conversion apparatus 11 into an alternating current that meets a requirement of the alternating current power grid AC.

It may be understood that the two bus capacitors C1 and C2 are connected in series between the positive direct current bus BUS+ and the negative direct current bus BUS-, the two output ends of the first direct current conversion circuit 111 are connected to the first bus capacitor C1, and the two output ends of the second direct current conversion circuit 112 are connected to the two ends of the second bus capacitor C2, to reduce voltage drop borne by each of the two direct current conversion circuits. This can reduce circuit costs of the two direct current conversion circuits, reduce costs of the power supply system 1, and further improve market competitiveness of the power supply system 1. In addition, a duty cycle of a controllable switch of at least one direct current conversion circuit in the foregoing two direct current conversion circuits is dynamically adjusted through closed-loop control, to implement half-bus voltage balancing. In this control manner, no additional component or circuit needs to be added, and costs of the power supply system 1 can be effectively reduced.

Further, in addition to a manner of adjusting the duty cycle of the controllable switch in the first direct current conversion circuit 111 or the second direct current conversion circuit 112, a manner of adding a bus voltage balancing circuit to the power conversion apparatus 11 may be further used for implementation.

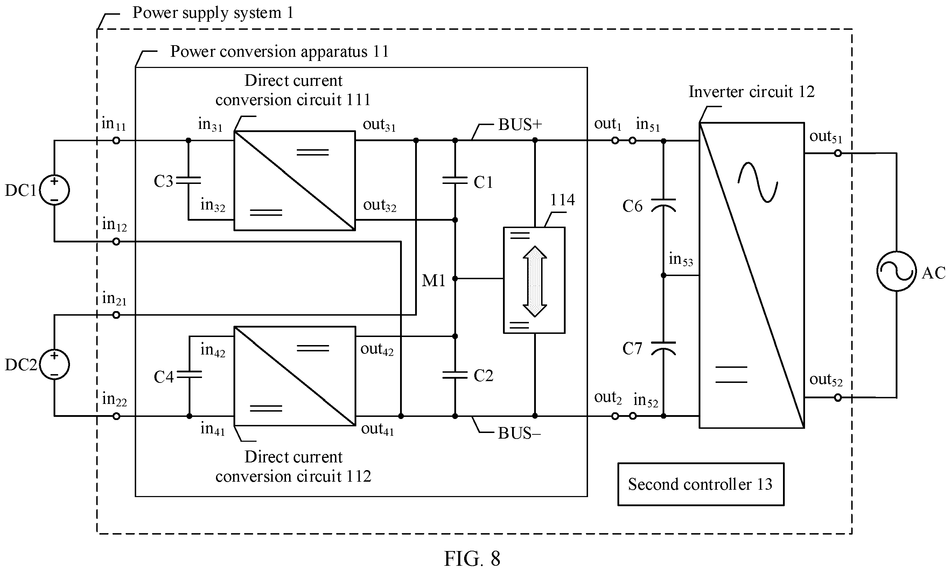

FIG. 8 is a schematic diagram of another structure of a power supply system according to this application. As shown in FIG. 8, a power supply system 1 includes an inverter circuit 12 and a power conversion apparatus 11 shown in FIG. 6a. A first output end out₁ and a second output end out₂ of the power conversion apparatus 11 are respectively connected to a first input end in₅₁ and a second input end in₅₂ of the inverter circuit 12. A first output end out₅₁ and a second output end outsz of the inverter circuit 12 are connected to an alternating current power grid AC. Optionally, the inverter circuit 12 further includes a third bus capacitor C6, a fourth bus capacitor C7, and a third input end in₅₃ of the inverter circuit 12. The third bus capacitor C6 is located between the first input end in₅₁ and the third input end in₅₃ of the inverter circuit 12. The fourth bus capacitor C7 is located between the third input end in₅₃ and the second input end in₅₂ of the inverter circuit 12. The inverter circuit 12 is a multi-level inverter circuit. For descriptions of other parts of the power conversion apparatus 11, refer to descriptions of corresponding parts in the embodiment shown in FIG. 6a. Details are not described herein again.

The power supply system 1 further includes a second controller 13. The second controller 13 and a first controller 113 in the power conversion apparatus 11 may be a same controller, or may be two controllers that are independent of each other. This is not limited in this application. It should be noted that the inverter circuit 12 and the power conversion apparatus 11 may be located inside a same device, to form an inverter together. In this case, the second controller 13 and the first controller 113 are the same controller. The inverter circuit 12 may also be independently located in the inverter, and the inverter and the power conversion apparatus 11 are independent of each other. In this case, the second controller 13 may be a controller in the inverter, and is independent of the first controller 113.

In an optional implementation, in a case in which the inverter circuit 12 and the power conversion apparatus 11 jointly form the inverter, after the power supply system 1 starts to work, the second controller 13 further obtains a first bus voltage of the first bus capacitor C1 and a second bus voltage of the second bus capacitor C2 in addition to controlling the power conversion apparatus 11 and the inverter circuit 12 to convert a direct current of a direct current power supply connected to the input end of the power conversion apparatus 11 into an alternating current that meets an requirement of the alternating current power grid AC. When there is a deviation between the first bus voltage and the second bus voltage, the second controller 13 controls the bus voltage balancing circuit 114 to transfer electric energy between the first bus capacitor C1 and the second bus capacitor C2, so that a difference between the first bus voltage and the second bus voltage decreases. This implements half-bus voltage balancing. Herein, for a specific implementation in which the second controller 13 transfers the electric energy between the first bus capacitor C1 and the second bus capacitor C2, to implement half-bus voltage balancing, refer to descriptions of corresponding parts in the embodiments shown in FIG. 6a to FIG. 6e.

In another optional implementation, in a case in which the inverter circuit 12 is independently located in the inverter, after the power supply system 1 starts to work, the first controller 113 further obtains the first bus voltage of the first bus capacitor C1 and the second bus voltage of the second bus capacitor C2 in addition to controlling the power conversion apparatus 11 to perform direct current conversion on a direct current of a direct current power supply connected to the input end of the power conversion apparatus 11. When there is a deviation between the first bus voltage and the second bus voltage, the first controller 113 controls the bus voltage balancing circuit 114 to transfer electric energy between the first bus capacitor C1 and the second bus capacitor C2, so that a difference between the first bus voltage and the second bus voltage decreases. This implements half-bus voltage balancing. Then, the second controller 13 controls the inverter circuit 12 to convert the direct current output by the power conversion apparatus 11 into an alternating current that meets a requirement of the alternating current power grid AC.

It may be understood that the two bus capacitors C1 and C2 are connected in series between the positive direct current bus BUS+ and the negative direct current bus BUS-, the two output ends of the first direct current conversion circuit 111 are connected to the first bus capacitor C1, and the two output ends of the second direct current conversion circuit 112 are connected to the two ends of the second bus capacitor C2, to reduce voltage drop borne by each of the two direct current conversion circuits. This can reduce circuit costs of the two direct current conversion circuits, reduce costs of the power supply system 1, and further improve market competitiveness of the power supply system 1. The bus voltage balancing circuit 114 implements half-bus voltage balancing, and may implement decoupling control with each direct current conversion circuit, to ensure flexible energy control of the direct current conversion circuit, thereby implementing flexible management of the direct current power supply, for example, MPPT without sacrificing a photovoltaic panel, or maximum energy utilization of an energy storage battery.

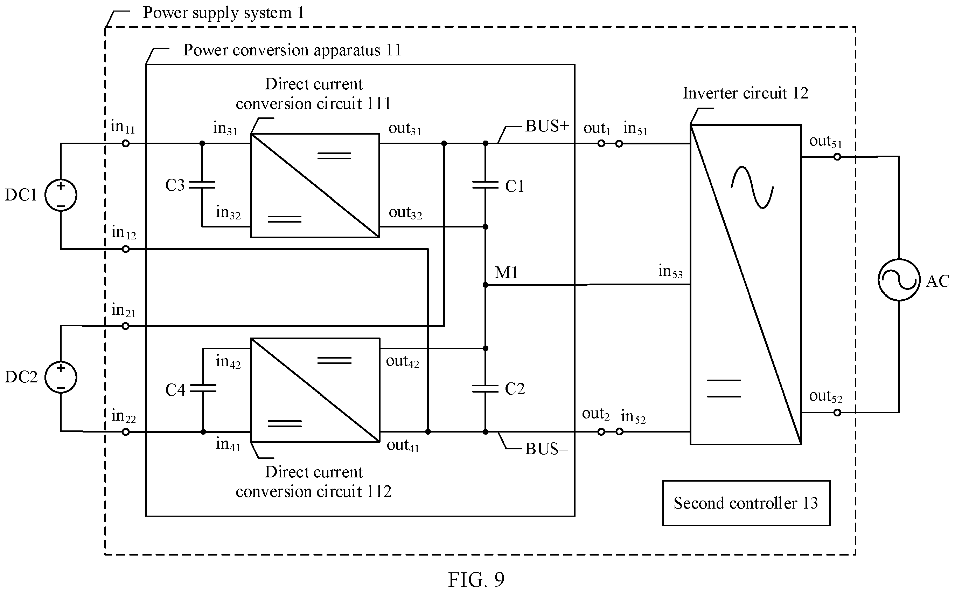

FIG. 9 is a schematic diagram of still another structure of a power supply system according to this application. As shown in FIG. 9, a power supply system 1 includes an inverter circuit 12 and a power conversion apparatus 11 shown in FIG. 4a. A first output end out₁ and a second output end out₂ of the power conversion apparatus 11 are respectively connected to a first input end in₅₁ and a second input end in₅₂ of the inverter circuit 12. A third input end in₅₃ of the inverter circuit 12 is connected to a bus midpoint M1. A first output end out₅₁ and a second output end out₅₂ of the inverter circuit 12 are connected to an alternating current power grid AC. The inverter circuit 12 is a multi-level inverter circuit. For descriptions of other parts of the power conversion apparatus 11, refer to descriptions of corresponding parts in the embodiment shown in FIG. 4a. Details are not described herein again.

The power supply system 1 further includes a second controller 13. The second controller 13 and a first controller 113 in the power conversion apparatus 11 may be a same controller, or may be two controllers that are independent of each other. This is not limited in this application. It should be noted that the inverter circuit 12 and the power conversion apparatus 11 may be located inside a same device, to form an inverter together. In this case, the second controller 13 and the first controller 113 are the same controller. The inverter circuit 12 may also be independently located in the inverter, and the inverter and the power conversion apparatus 11 are independent of each other. In this case, the second controller 13 may be a controller in the inverter, and is independent of the first controller 113.

In an optional implementation, in a case in which the inverter circuit 12 and the power conversion apparatus 11 jointly form the inverter, after the power supply system 1 starts to work, the second controller 13 further obtains a first bus voltage of the first bus capacitor C1 and a second bus voltage of the second bus capacitor C2 in addition to controlling the power conversion apparatus 11 and the inverter circuit 12 to convert a direct current of a direct current power supply connected to the input end of the power conversion apparatus 11 into an alternating current that meets an requirement of the alternating current power grid AC. When there is the deviation between the first bus voltage and the second bus voltage, the second controller 13 controls the inverter circuit 12 to output electric energy stored in the first bus capacitor C1 and the second bus capacitor C2 to the alternating current power grid AC. Electric energy output by a bus capacitor corresponding to the larger bus voltage in the first bus voltage and the second bus voltage to the alternating current power grid AC is greater than electric energy output by a bus capacitor corresponding to the smaller bus voltage to the alternating current power grid AC. Therefore, the difference between the first bus voltage and the second bus voltage decreases. This implements half-bus voltage balancing.

In an optional embodiment, in a case in which the first bus voltage is greater than the second bus voltage, in an alternating current positive half cycle, the second controller 13 controls an upper bridge arm switch that is in the inverter circuit 12 and that is connected to the first input end in₅₁ of the inverter circuit 12 to be turned off after being turned on for fifth preset duration; and after the upper bridge arm switch is turned off, controls a middle bridge arm switch that is connected to the third input end in₅₃ of the inverter circuit 12 to be turned off after being turned on for sixth preset duration. In an alternating current negative half cycle, the second controller 13 controls a lower bridge arm switch that is in the inverter circuit 12 and that is connected to the second input end in₅₂ of the inverter circuit 12 to be turned off after being turned on for seventh preset duration; and after the lower bridge arm switch is turned off, controls a middle bridge arm switch that is connected to the third input end in₅₃ of the inverter circuit 12 to be turned off after being turned on for eighth preset duration. The fifth preset duration is greater than the seventh preset duration. It should be noted that the fifth preset duration, the sixth preset duration, the seventh preset duration, and the eighth preset duration may be understood as turn-on time in conventional PWM control. The second controller 13 may flexibly and dynamically adjust time of the fifth preset duration, the sixth preset duration, the seventh preset duration, and the eighth preset duration, and implement half-bus voltage balancing control on the power conversion apparatus 11 by controlling the switching device for a plurality of times.

In a process in which the upper bridge arm switch is turned on, the electric energy stored in the first bus capacitor C1 is output to the alternating current power grid AC. In a process in which the lower bridge arm switch is turned on, the electric energy stored in the second bus capacitor C2 is output to the alternating current power grid AC. Because turn-on duration of the upper bridge arm switch is greater than turn-on duration of the lower bridge arm switch, it is ensured that more electric energy stored in the first bus capacitor C1 can be fed into the alternating current power grid AC than that stored in the second bus capacitor C2, so that a voltage of the first bus capacitor C1 is reduced, and a difference between the first bus voltage and the second bus voltage decreases. This implements half-bus voltage balancing.

In another optional embodiment, when the first bus voltage is less than the second bus voltage, the second controller 13 controls the fifth preset duration to be less than the seventh preset duration. It is ensured that more electric energy stored in the second bus capacitor C2 can be fed into the alternating current power grid AC than that stored in the first bus capacitor C1, so that the voltage of the second bus capacitor C2 is reduced, and the difference between the first bus voltage and the second bus voltage decreases. This implements half-bus voltage balancing.

In another optional implementation, in a case in which the inverter circuit 12 is independently located in the inverter, after the power supply system 1 starts to work, the first controller 113 controls the power conversion apparatus 11 to convert the direct current of the direct current power supply connected to the input end of the power conversion apparatus 11 into a direct current that meets a requirement of a direct current bus. The second controller 13 obtains the first bus voltage of the first bus capacitor C1 and the second bus voltage of the second bus capacitor C2. When there is a deviation between the first bus voltage between the second bus voltage, the second controller 13 controls the inverter circuit 12, so that electric energy output by a bus capacitor corresponding to the larger bus voltage in the first bus voltage and the second bus voltage to the alternating current power grid AC is greater than electric energy output by a bus capacitor corresponding to the smaller bus voltage to the alternating current power grid AC, thereby ensuring that the power supply system 1 not only can output an alternating current that meets a requirement of the alternating current power grid AC, but also can implement half-bus voltage balancing.

It may be understood that the two bus capacitors C1 and C2 are connected in series between the positive direct current bus BUS+ and the negative direct current bus BUS-, the two output ends of the first direct current conversion circuit 111 are connected to the first bus capacitor C1, and the two output ends of the second direct current conversion circuit 112 are connected to the two ends of the second bus capacitor C2, to reduce voltage drop borne by each of the two direct current conversion circuits. This can reduce circuit costs of the two direct current conversion circuits, reduce costs of the power supply system 1, and further improve market competitiveness of the power supply system 1. In addition, half-bus voltage balancing is implemented by controlling the inverter circuit 12, and no additional component or circuit needs to be added, thereby effectively reducing costs of the power supply system 1. In addition, because the direct current conversion circuit and the inverter circuit 12 share the first bus capacitor C1 and the second bus capacitor C2, a quantity of bus capacitors used in the power supply system 1 can be reduced, thereby further reducing costs of the power supply system 1.

Because the half-bus voltage balancing capability of the inverter circuit 12 is limited, in actual application, the half-bus voltage balancing capability may still be further improved by adding the bus voltage balancing circuit 114.

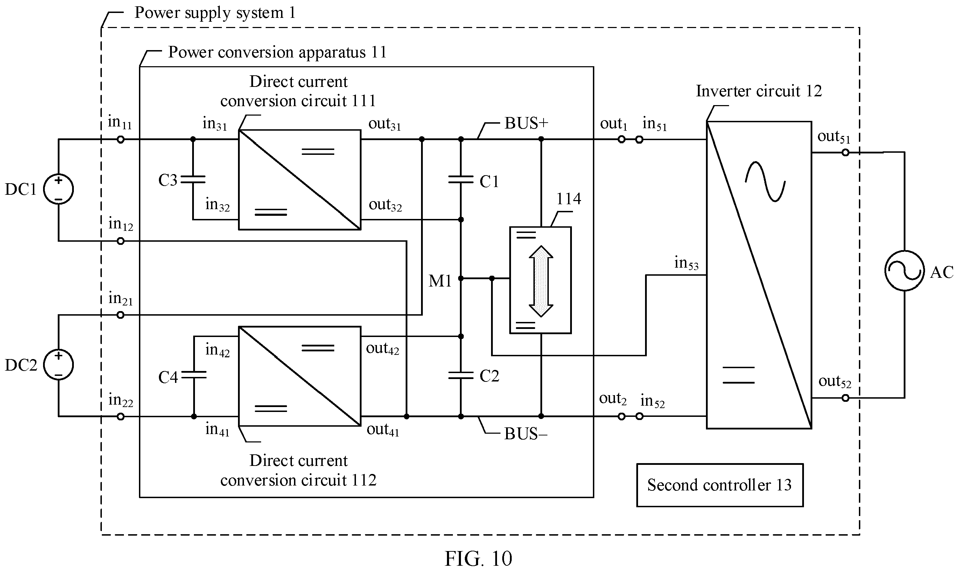

FIG. 10 is a schematic diagram of yet another structure of a power supply system according to this application. As shown in FIG. 10, a power supply system 1 includes an inverter circuit 12 and a power conversion apparatus 11 shown in FIG. 6a. A first output end out₁ and a second output end out₂ of the power conversion apparatus 11 are respectively connected to a first input end in₅₁ and a second input end in₅₂ of the inverter circuit 12. A third input end in₅₃ of the inverter circuit 12 is connected to a bus midpoint M1. A first output end out₅₁ and a second output end out₅₂ of the inverter circuit 12 are connected to an alternating current power grid AC. The inverter circuit 12 is a multi-level inverter circuit. For descriptions of other parts of the power conversion apparatus 11, refer to descriptions of corresponding parts in the embodiment shown in FIG. 6a. Details are not described herein again.

The power supply system 1 further includes a second controller 13. The second controller 13 and a first controller 113 in the power conversion apparatus 11 may be a same controller, or may be two controllers that are independent of each other. This is not limited in this application. It should be noted that the inverter circuit 12 and the power conversion apparatus 11 may be located inside a same device, to form an inverter together. In this case, the second controller 13 and the first controller 113 are the same controller. The inverter circuit 12 may also be independently located in the inverter, and the inverter and the power conversion apparatus 11 are independent of each other. In this case, the second controller 13 may be a controller in the inverter, and is independent of the first controller 113.

In an optional implementation, in a case in which the inverter circuit 12 and the power conversion apparatus 11 jointly form the inverter, after the power supply system 1 starts to work, the second controller 13 further obtains a first bus voltage of the first bus capacitor C1 and a second bus voltage of the second bus capacitor C2 in addition to controlling the power conversion apparatus 11 and the inverter circuit 12 to convert a direct current of a direct current power supply connected to the input end of the power conversion apparatus 11 into an alternating current that meets an requirement of the alternating current power grid AC. When there is a deviation between the first bus voltage and the second bus voltage, the second controller 13 controls the bus voltage balancing circuit 114 to transfer electric energy between the first bus capacitor C1 and the second bus capacitor C2, so that a difference between the first bus voltage and the second bus voltage decreases. This implements half-bus voltage balancing.

After the bus voltage balancing circuit 114 works for preset duration, if there is still a deviation between the first bus voltage and the second bus voltage, the second controller 13 controls the inverter circuit 12 to output electric energy stored in the first bus capacitor C1 and the second bus capacitor C2 to the alternating current power grid AC. Electric energy output by a bus capacitor corresponding to the larger bus voltage in the first bus voltage and the second bus voltage to the alternating current power grid AC is greater than electric energy output by a bus capacitor corresponding to the smaller bus voltage to the alternating current power grid AC. Therefore, the difference between the first bus voltage and the second bus voltage decreases.

In another optional implementation, in a case in which the inverter circuit 12 is independently located in the inverter, after the power supply system 1 starts to work, the first controller 113 further obtains the first bus voltage of the first bus capacitor C1 and the second bus voltage of the second bus capacitor C2 in addition to controlling the power conversion apparatus 11 to perform direct current conversion on a direct current of a direct current power supply connected to the input end of the power conversion apparatus 11. When there is a deviation between the first bus voltage and the second bus voltage, the first controller 113 controls the bus voltage balancing circuit 114 to transfer electric energy between the first bus capacitor C1 and the second bus capacitor C2, so that a difference between the first bus voltage and the second bus voltage decreases. This implements half-bus voltage balancing. The second controller 13 controls the inverter circuit 12 to convert the direct current output by the power conversion apparatus 11 into an alternating current that meets a requirement of the alternating current power grid AC.

After the bus voltage balancing circuit 114 works for preset duration, if the second controller 13 detects that there is still a deviation between the first bus voltage and the second bus voltage, the second controller 13 controls the inverter circuit 12 to output the electric energy stored in the first bus capacitor C1 and the second bus capacitor C2 to the alternating current power grid AC. Electric energy output by a bus capacitor corresponding to the larger bus voltage in the first bus voltage and the second bus voltage to the alternating current power grid AC is greater than electric energy output by a bus capacitor corresponding to the smaller bus voltage to the alternating current power grid AC. Therefore, the difference between the first bus voltage and the second bus voltage decreases.

It may be understood that the two bus capacitors C1 and C2 are connected in series between the positive direct current bus BUS+ and the negative direct current bus BUS-, the two output ends of the first direct current conversion circuit 111 are connected to the first bus capacitor C1, and the two output ends of the second direct current conversion circuit 112 are connected to the two ends of the second bus capacitor C2, to reduce voltage drop borne by each of the two direct current conversion circuits. This can reduce circuit costs of the two direct current conversion circuits, reduce costs of the power supply system 1, and further improve market competitiveness of the power supply system 1. In addition, half-bus voltage balancing is implemented by controlling the bus voltage balancing circuit 114 and the inverter circuit 12, to compensate for a problem that a half-bus voltage balancing capability of the inverter circuit 12 is limited. Therefore, control precision of half-bus voltage balancing can be further improved. In addition, the bus voltage balancing circuit 114 may further control and reduce a voltage ripple of a half-bus, that is, reduce voltage ripples of the bus capacitors C1 and C2, thereby improving grid-connected quality of an inverter side.

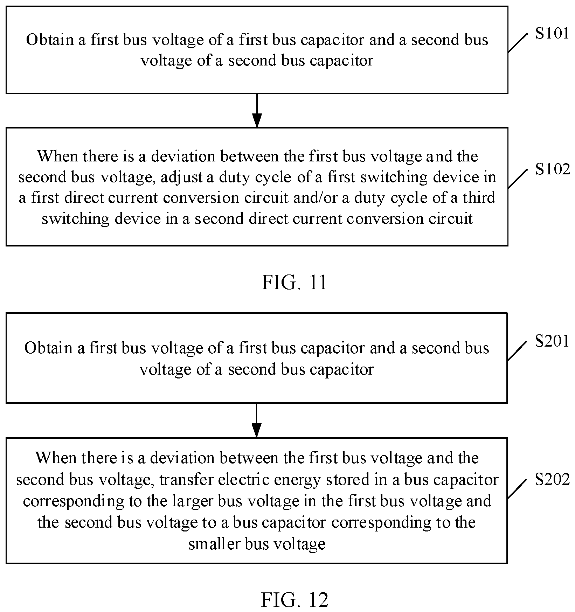

FIG. 11 is a schematic flowchart of a bus voltage control method of a power conversion apparatus according to this application. The bus voltage control method of the power conversion apparatus provided in this embodiment of this application is applicable to the power conversion apparatus 11 shown in FIG. 4a to FIG. 5f. The bus voltage control method of the power conversion apparatus may include the following steps.

S101: Obtain a first bus voltage of a first bus capacitor and a second bus voltage of a second bus capacitor.

In an optional implementation, after the power conversion apparatus starts to work, the power conversion apparatus starts to obtain the first bus voltage of the first bus capacitor and the second bus voltage of the second bus capacitor.

S102: When there is a deviation between the first bus voltage and the second bus voltage, adjust a duty cycle of a first switching device in a first direct current conversion circuit and/or a duty cycle of a third switching device in a second direct current conversion circuit.

In an optional embodiment, when the first bus voltage is greater than the second bus voltage and a current of the power conversion apparatus flows from a direct current power supply to a load, the power conversion apparatus increases the duty cycle of the first switching device and/or decreases the duty cycle of the third switching device.

In another optional embodiment, when the first bus voltage is less than the second bus voltage and the current of the power conversion apparatus flows from the direct current power supply to the load, the power conversion apparatus increases the duty cycle of the third switching device and/or decreases the duty cycle of the first switching device.

In another optional embodiment, when the first bus voltage is greater than the second bus voltage and the current of the power conversion apparatus flows from the load to the direct current power supply, the power conversion apparatus decreases the duty cycle of the first switching device and/or increases the duty cycle of the third switching device.

In another optional embodiment, when the first bus voltage is less than the second bus voltage and the current of the power conversion apparatus flows from the load to the direct current power supply, the power conversion apparatus decreases the duty cycle of the third switching device and/or increases the duty cycle of the first switching device.

During specific implementation, for more operations performed by the power conversion apparatus in the bus voltage control method of the power conversion apparatus provided in this application, refer to implementations performed by the power conversion apparatus 11 shown in FIG. 4a to FIG. 5f. Details are not described herein again.

In this embodiment of this application, the power conversion apparatus 11 may dynamically adjust a duty cycle of a controllable switch of at least one direct current conversion circuit in the foregoing two direct current conversion circuits through closed-loop control, to implement half-bus voltage balancing. In this control manner, no additional component or circuit needs to be added, and costs of the power conversion apparatus 11 can be effectively reduced.

FIG. 12 is another schematic flowchart of a bus voltage control method of a power conversion apparatus according to this application. The bus voltage control method of the power conversion apparatus provided in this embodiment of this application is applicable to the power conversion apparatus 11 shown in FIG. 6a to FIG. 6e. The bus voltage control method of the power conversion apparatus may include the following steps.

S201: Obtain a first bus voltage of a first bus capacitor and a second bus voltage of a second bus capacitor

S202: When there is a deviation between the first bus voltage and the second bus voltage, transfer electric energy stored in a bus capacitor corresponding to the larger bus voltage in the first bus voltage and the second bus voltage to a bus capacitor corresponding to the smaller bus voltage.

In an optional implementation, when there is a deviation between the first bus voltage and the second bus voltage, the power conversion apparatus transfers the electric energy stored in the bus capacitor corresponding to the larger bus voltage in the first bus voltage and the second bus voltage to the energy storage element, and transfers the electric energy of the energy storage element to the bus capacitor corresponding to the smaller bus voltage, thereby reducing a voltage value of the larger bus voltage, and further reducing the difference between the first bus voltage and the second bus voltage. This implements half-bus voltage balancing. The energy storage element includes a power inductor and a resonant capacitor.

In an optional embodiment, when the first bus voltage is greater than the second bus voltage, the power conversion apparatus transfers the electric energy stored in the first bus capacitor to the energy storage element, and transfers the electric energy of the energy storage element to the second bus capacitor, to reduce the difference between the first bus voltage and the second bus voltage. This implements half-bus voltage balancing.

In another optional embodiment, when the first bus voltage is less than the second bus voltage, the power conversion apparatus transfers the electric energy stored in the second bus capacitor to the energy storage element, and transfers the electric energy of the energy storage element to the first bus capacitor, to reduce the difference between the first bus voltage and the second bus voltage. This implements half-bus voltage balancing.

During specific implementation, for more operations performed by the power conversion apparatus in the bus voltage control method of the power conversion apparatus provided in this application, refer to implementations performed by the power conversion apparatus 11 shown in FIG. 6a to FIG. 6e. Details are not described herein again.

In this embodiment of this application, the power conversion apparatus 11 implements electric energy transfer between the first bus capacitor and the second bus capacitor through the bus voltage balancing circuit 114, to implement half-bus voltage balancing. The bus voltage balancing circuit 114 implements half-bus voltage balancing, and may implement decoupling control with each direct current conversion circuit, to ensure flexible energy control of the direct current conversion circuit, thereby implementing flexible management of the direct current power supply, for example, MPPT without sacrificing a photovoltaic panel, or maximum energy utilization of an energy storage battery.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power conversion apparatus, wherein the power conversion apparatus comprises a first group of input ends, a second group of input ends, a first direct current conversion circuit, a second direct current conversion circuit, a positive direct current bus, a negative direct current bus, a first bus capacitor, a second bus capacitor, and a first output end and a second output end of the power conversion apparatus, the first group of input ends and the second group of input ends each are connected to a direct current power supply, the first output end and the second output end of the power conversion apparatus are connected to a load, the first group of input ends comprise a first group of first input ends and a first group of second input ends, and the second group of input ends comprise a second group of first input ends and a second group of second input ends;
the first bus capacitor and the second bus capacitor are connected in series between the positive direct current bus and the negative direct current bus, and the positive direct current bus and the negative direct current bus are respectively connected to the first output end and the second output end of the power conversion apparatus;
an input end of the first direct current conversion circuit is connected to the first group of first input ends, and an output end of the first direct current conversion circuit is separately connected to two ends of the first bus capacitor;
an input end of the second direct current conversion circuit is connected to the second group of second input ends, and an output end of the second direct current conversion circuit is separately connected to two ends of the second bus capacitor; and
the first group of second input ends are connected to the negative direct current bus, and the second group of first input ends are connected to the positive direct current bus.

2. The power conversion apparatus according to claim 1, wherein the power conversion apparatus further comprises a first input capacitor and a second input capacitor, the input end of the first direct current conversion circuit comprises a first input end and a second input end, one end of the first input capacitor is connected to the first input end of the first direct current conversion circuit and the first group of first input ends, and the other end of the first input capacitor is connected to the second input end of the first direct current conversion circuit or the first group of second input ends; and
the input end of the second direct current conversion circuit comprises a first input end and a second input end, one end of the second input capacitor is connected to the first input end of the second direct current conversion circuit and the second group of second input ends, and the other end of the second input capacitor is connected to the second input end of the second direct current conversion circuit or the second group of first input ends.

3. The power conversion apparatus according to claim 2, wherein the output end of the first direct current conversion circuit comprises a first output end and a second output end, the first direct current conversion circuit comprises a first switching device, a second switching device, and a first power inductor, the second switching device and the first power inductor are connected in series between the first input end and the first output end of the first direct current conversion circuit, or the second switching device and the first power inductor are connected in series between the second input end and the second output end of the first direct current conversion circuit, one end of the first switching device is connected to the first input end or the second input end of the first direct current conversion circuit, and the other end of the first switching device is connected to a connection point between the second switching device and the first power inductor; and
the second direct current conversion circuit comprises a first output end and a second output end, the second direct current conversion circuit comprises a third switching device, a fourth switching device, and a second power inductor, the fourth switching device and the second power inductor are connected in series between the first input end and the first output end of the second direct current conversion circuit, or the fourth switching device and the second power inductor are connected in series between the second input end and the second output end of the second direct current conversion circuit, one end of the third switching device is connected to the first input end or the second input end of the second direct current conversion circuit, and the other end of the third switching device is connected to a connection point between the fourth switching device and the second power inductor

4. The power conversion apparatus according to claim 3, wherein both the first switching device and the third switching device are controllable switching transistors, and both the second switching device and the fourth switching device are controllable switching transistors or uncontrollable diodes.

5. The power conversion apparatus according to any one of claims 1 to 4, wherein the power conversion apparatus further comprises a bus voltage balancing circuit; and
a first end, a second end, and a third end of the bus voltage balancing circuit are respectively connected to a connection point between the first bus capacitor and the second bus capacitor, the positive direct current bus, and the negative direct current bus, and are configured to transfer electric energy stored in the first bus capacitor to the second bus capacitor, or transfer electric energy stored in the second bus capacitor to the first bus capacitor, to decrease a difference between a first bus voltage of the first bus capacitor and a second bus voltage of the second bus capacitor

6. The power conversion apparatus according to claim 5, wherein the bus voltage balancing circuit comprises an energy storage element; and
the bus voltage balancing circuit is configured to: transfer the electric energy stored in the first bus capacitor to the energy storage element, and transfer the electric energy of the energy storage element to the second bus capacitor; or transfer the electric energy stored in the second bus capacitor to the energy storage element, and transfer the electric energy of the energy storage element to the first bus capacitor

7. The power conversion apparatus according to claim 6, wherein the energy storage element is a third power inductor, the bus voltage balancing circuit further comprises a fifth switching device and a sixth switching device, one end of the third power inductor is connected to the first end, and the other end of the third power inductor is separately connected to the second end and the third end through the fifth switching device and the sixth switching device.

8. The power conversion apparatus according to claim 6, wherein the energy storage element is a resonant capacitor, the bus voltage balancing circuit further comprises a seventh switching device, an eighth switching device, a ninth switching device, a tenth switching device, and a resonant inductor, the seventh switching device and the eighth switching device are connected in series to form a first switching bridge arm, two ends of the first switching bridge arm are respectively connected to the second end and the first end, a first end of the seventh switching device is connected to the second end, the ninth switching device and the tenth switching device are connected in series to form a second switching bridge arm, two ends of the second switching bridge arm are respectively connected to the first end and the third end, a first end of the ninth switching device is connected to the first end, and the resonant inductor and the resonant capacitor are connected in series between a midpoint of the first switching bridge arm and a midpoint of the second switching bridge arm.

9. A control method, configured to control the power conversion apparatus according to any one of claims 3 to 8, wherein
the method comprises:
when there is a deviation between the first bus voltage of the first bus capacitor and the second bus voltage of the second bus capacitor, adjusting a duty cycle of the first switching device and/or a duty cycle of the third switching device, so that a difference between the first bus voltage and the second bus voltage decreases.

10. The method according to claim 9, wherein when there is the deviation between the first bus voltage of the first bus capacitor deviates and the second bus voltage of the second bus capacitor, the adjusting a duty cycle of the first switching device and/or a duty cycle of the third switching device comprises:
when the first bus voltage is greater than the second bus voltage and a current of the power conversion apparatus flows from the direct current power supply to the load, increasing the duty cycle of the first switching device and/or decreasing the duty cycle of the third switching device.

11. The method according to claim 9, wherein when there is the deviation between the first bus voltage of the first bus capacitor deviates and the second bus voltage of the second bus capacitor, the adjusting a duty cycle of the first switching device and/or a duty cycle of the third switching device comprises:
when the first bus voltage is less than the second bus voltage and a current of the power conversion apparatus flows from the direct current power supply to the load, increasing the duty cycle of the third switching device and/or decreasing the duty cycle of the first switching device.

12. The method according to claim 9, wherein when there is the deviation between the first bus voltage of the first bus capacitor deviates and the second bus voltage of the second bus capacitor, the adjusting a duty cycle of the first switching device and/or a duty cycle of the third switching device comprises:
when the first bus voltage is greater than the second bus voltage and a current of the power conversion apparatus flows from the load to the direct current power supply, decreasing the duty cycle of the first switching device and/or increasing the duty cycle of the third switching device.

13. The method according to claim 9, wherein when there is the deviation between the first bus voltage of the first bus capacitor deviates and the second bus voltage of the second bus capacitor, the adjusting a duty cycle of the first switching device and/or a duty cycle of the third switching device comprises:
when the first bus voltage is less than the second bus voltage and a current of the power conversion apparatus flows from the load to the direct current power supply, decreasing the duty cycle of the third switching device and/or increasing the duty cycle of the first switching device.

14. A control method, configured to control the power conversion apparatus according to any one of claims 5 to 8, wherein
the method comprises:
when there is a deviation between the first bus voltage of the first bus capacitor and the second bus voltage of the second bus capacitor, controlling the bus voltage balancing circuit to transfer electric energy stored in a bus capacitor corresponding to the larger bus voltage in the first bus voltage and the second bus voltage to a bus capacitor corresponding to the smaller bus voltage.

15. The method according to claim 14, wherein the bus voltage balancing circuit comprises the energy storage element; and
when there is the deviation between the first bus voltage of the first bus capacitor and the second bus voltage of the second bus capacitor, the controlling the bus voltage balancing circuit to transfer electric energy stored in a bus capacitor corresponding to the larger bus voltage in the first bus voltage and the second bus voltage to a bus capacitor corresponding to the smaller bus voltage comprises:
when there is the deviation between the first bus voltage and the second bus voltage, controlling the bus voltage balancing circuit to transfer the electric energy stored in the bus capacitor corresponding to the larger bus voltage to the energy storage element, and transfer the electric energy of the energy storage element to the bus capacitor corresponding to the smaller bus voltage.

16. The method according to claim 15, wherein the energy storage element is the third power inductor; and when there is the deviation between the first bus voltage and the second bus voltage, the controlling the bus voltage balancing circuit to transfer the electric energy stored in the bus capacitor corresponding to the larger bus voltage to the energy storage element, and transfer the electric energy of the energy storage element to the bus capacitor corresponding to the smaller bus voltage comprises:
when the first bus voltage is greater than the second bus voltage, controlling the fifth switching device to be turned off after being turned on for first preset duration, and transferring, in a process in which the fifth switching device is turned on, the electric energy stored in the first bus capacitor to the third power inductor; and
after the fifth switching device is turned off, controlling the sixth switching device to be turned off after being turned on for second preset duration, and transferring, in a process in which the sixth switching device is turned on, the electric energy stored in the third power inductor to the second bus capacitor.

17. The method according to claim 15, wherein the energy storage element is the resonant capacitor;
when there is the deviation between the first bus voltage and the second bus voltage, the controlling the bus voltage balancing circuit to transfer the electric energy stored in the bus capacitor corresponding to the larger bus voltage to the energy storage element, and transfer the electric energy of the energy storage element to the bus capacitor corresponding to the smaller bus voltage comprises:
when the first bus voltage is greater than the second bus voltage, controlling the seventh switching device and the ninth switching device to be turned off after being turned on for third preset duration, and transferring, in a process in which the seventh switching device and the ninth switching device are turned on, the electric energy stored in the first bus capacitor to the resonant capacitor; and
after the seventh switching device and the ninth switching device are turned off, controlling the eighth switching device and the tenth switching device to be turned off after being turned on for fourth preset duration, and transferring, in a process in which the eighth switching device and the tenth switching device are turned on, the electric energy stored in the resonant capacitor to the second bus capacitor

18. A power supply system, wherein the power supply system comprises an inverter circuit and the power conversion apparatus according to any one of claims 1 to 8, the first output end and the second output end of the power conversion apparatus are respectively connected to a first input end and a second input end of the inverter circuit, and an output end of the inverter circuit is connected to a power grid.

19. The power supply system according to claim 18, wherein the inverter circuit further comprises a third bus capacitor, a fourth bus capacitor, and a third input end of the inverter circuit, the third bus capacitor is connected between the first input end of the inverter circuit and the third input end of the inverter circuit, and the fourth bus capacitor is connected between the third input end of the inverter circuit and the second input end of the inverter circuit.

20. The power supply system according to claim 18, wherein the inverter circuit further comprises a third input end of the inverter circuit, and the third input end of the inverter circuit is connected to the connection point between the first bus capacitor and the second bus capacitor; and
the inverter circuit is configured to: when there is a deviation between the first bus voltage of the first bus capacitor and the second bus voltage of the second bus capacitor, output electric energy stored in the first bus capacitor and the second bus capacitor to the power grid, wherein electric energy output by a bus capacitor corresponding to the larger bus voltage in the first bus voltage and the second bus voltage to the power grid is greater than electric energy output by a bus capacitor corresponding to the smaller bus voltage to the power grid.
